Europäisches Patentamt

European Patent Office

Office européen des brevets

(19)

(11) **EP 1 447 996 A2**

(12) **EUROPEAN PATENT APPLICATION**

(43) Date of publication:
**18.08.2004 Bulletin 2004/34**

(51) Int Cl.$^7$: **H04N 13/04**

(21) Application number: **04250735.0**

(22) Date of filing: **11.02.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **14.02.2003 JP 2003036736**

(71) Applicant: **CANON KABUSHIKI KAISHA
Tokyo (JP)**

(72) Inventors:
• **Sudo, Toshiyuki
Ohta-ku, Tokyo (JP)**
• **Taniguchi, Naosato
Ohta-ku, Tokyo (JP)**
• **Morishima, Hideki
Ohta-ku, Tokyo (JP)**
• **Nishihara, Hiroshi
Ohta-ku, Tokyo (JP)**

(74) Representative:
**Beresford, Keith Denis Lewis et al
BERESFORD & Co.
16 High Holborn
London WC1V 6BX (GB)**

(54) **Stereoscopic image display apparatus**

(57)    A stereoscopic image display apparatus is disclosed with which the discontinuities in the parallax images viewed from any viewing region can be alleviated, and which is capable of performing high-quality stereoscopic display. The stereoscopic image display apparatus includes a display device synthetically displaying a plurality of parallax images by different pixels, and an optical separating member in which a plurality of state-selective regions are arranged, which have properties of selectively transmitting light with different states. The optical separating member directs, of the light from the pixels, the light transmitted through the state-selective regions to a different viewing region for each parallax image.

FIG. 4

**EP 1 447 996 A2**

## Description

The present invention relates to stereoscopic image display apparatuses, and in particular to stereoscopic image display apparatuses which are suitable to perform stereoscopic display with televisions, videoplayers, computer monitors and game machines or the like, for viewers not using any special glasses or the like.

Well-known conventional stereoscopic display apparatuses are for example stereoscopic display apparatuses using parallax barriers or lenticular lens. With these techniques, a stereoscopic image is presented to a viewer at any viewpoint by lining up a plurality of parallax image information regions periodically in horizontal direction (that is, in vertical stripes) on an image display surface of a display device, and by providing the individual image information light rays with directionality and directing them toward a plurality of horizontal viewing regions (viewpoints), with a parallax barrier or lenticular lens (see Japanese Patent Application Laid-Open No. H07(1995)-234378).

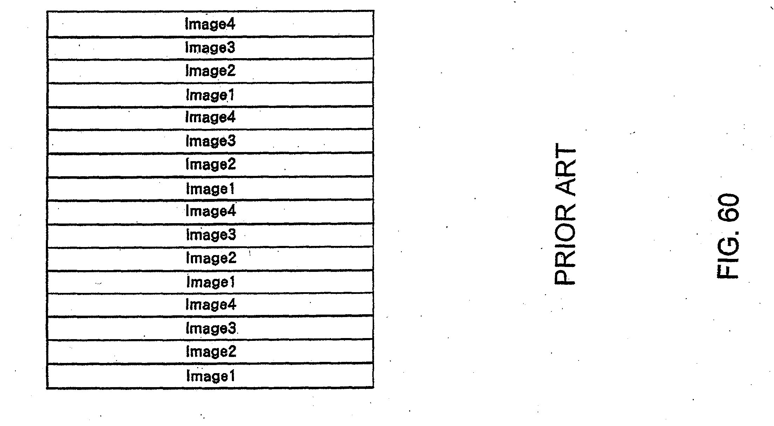

FIG. 60 is a diagram of the arrangement of the parallax image information on the image display surface for the case that there are four parallax images. Image 1 to 4 represent pieces of the parallax image information from respectively different viewpoints. In most cases, the parallax image information is rendered in oblong vertical regions that have a width corresponding to one pixel and a height which is equal to the height of the entire image display surface. Sequences of parallax image information as shown in FIG. 60 are repeated over the entire image display surface.

However, when the number of parallax images shown to the viewer is increased in such a conventional stereoscopic image display apparatus, the problem occurs that the resolution of the image viewed from a given viewpoint deteriorates.

For example, when parallax images from n viewpoints are to be presented to a viewer with a conventional stereoscopic image display apparatus, then the resolution of the images from each of the viewpoints deteriorates to 1/n. In particular since this deterioration phenomenon occurs only in the horizontal direction, the viewer will perceive striking discontinuities in the image.

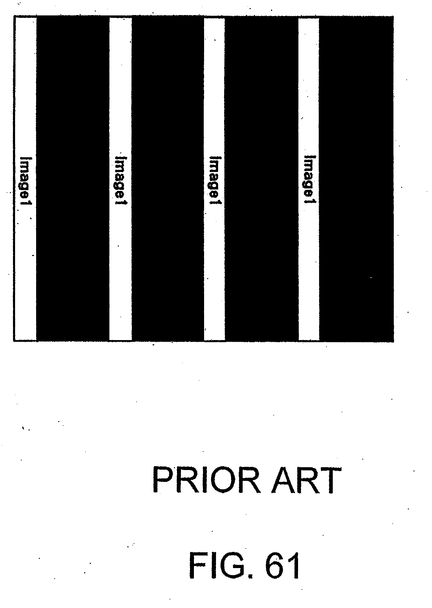

FIG. 61 is a diagram illustrating the state of such discontinuities. When a stereoscopic image is viewed from one of four viewpoints, the image information is viewed while always skipping three rows of image information, as shown in FIG. 61. The image information in the region painted black in FIG. 61 is not viewed. This is also the same when viewing from other viewpoints. Consequently, when further increasing the number of parallax images, then these discontinuities become even more striking.

When for example twelve viewpoints are formed in the horizontal direction using this conventional stereoscopic image display apparatus, then only the information of every twelfth row in the horizontal direction can be viewed from a given viewpoint.

It is an object of the present invention to provide a stereoscopic image display apparatus with which the discontinuities in the parallax images viewed from any viewing region can be alleviated, and which is capable of performing high-quality stereoscopic display.

A stereoscopic image display apparatus according to one aspect of the present invention includes a display device displaying a plurality of parallax images by different pixels, and an optical separating member in which a plurality of state-selective regions are lined up, which have properties of selectively transmitting light with different states. The optical separating member directs, of the light from the pixels, the light transmitted through the state-selective regions to different viewing regions for each parallax image.

Further objects and features of the stereoscopic image display apparatus according to embodiments will become apparent from the following detailed description of preferred embodiments thereof taken in conjunction with the accompanying drawings, in which:

FIG. 1 is a perspective view showing the general structure of a stereoscopic image display apparatus according to Embodiment 1 of the present invention.

FIG. 2 is a front view showing the pixel arrangement on a display device used in the stereoscopic image display apparatus of Embodiment 1.

FIG. 3 is a front view showing a transmission filter arrangement on a parallax barrierparallax barrier used in the stereoscopic image display apparatus of Embodiment 1.

FIG. 4 is a top view of the stereoscopic image display apparatus of Embodiment 1.

FIG. 5 is a top view of the stereoscopic image display apparatus of Embodiment 1.

FIG. 6 is a top view of the stereoscopic image display apparatus of Embodiment 1.

FIG. 7 is a top view of the stereoscopic image display apparatus of Embodiment 1.

FIG. 8 is a top view of the stereoscopic image display apparatus of Embodiment 1.

FIG. 9 is a top view of the stereoscopic image display apparatus of Embodiment 1.

FIG. 10 is a top view of the stereoscopic image display apparatus of Embodiment 1.

FIG. 11 is a front view showing a monochrome display device and a color filter that can be used for the stereoscopic image display apparatus of Embodiment 1.

FIG. 12 is a diagram of an image viewed with the stereoscopic image display apparatus of Embodiment 1.

FIG. 13 is a diagram of an image viewed with the stereoscopic image display apparatus of Embodiment 1.

FIG. 14 is a diagram of an original image displayed with the display device of the stereoscopic image display apparatus of Embodiment 1.

FIG. 15 shows an image viewed with a conventional stereoscopic image display apparatus.

FIG. 16 shows an image viewed with the stereoscopic image display apparatus of Embodiment 1.

FIG. 17 is a front view showing the pixel arrangement in a display device used in a stereoscopic image display apparatus according to Embodiment 2.

FIG. 18 is a front view showing a transmission filter arrangement on a parallax barrierparallax barrier used in the stereoscopic image display apparatus of Embodiment 2.

FIG. 19 is a top view of the stereoscopic image display apparatus of Embodiment 2.

FIG. 20 is a top view of the stereoscopic image display apparatus of Embodiment 2.

FIG. 21 is a top view of the stereoscopic image display apparatus of Embodiment 2.

FIG. 22 is a top view of the stereoscopic image display apparatus of Embodiment 2.

FIG. 23 is a top view of the stereoscopic image display apparatus of Embodiment 2.

FIG. 24 is a top view of the stereoscopic image display apparatus of Embodiment 2.

FIG. 25 is a front view showing a monochrome display device and a polarization filter that can be used for the stereoscopic image display apparatus of Embodiment 2.

FIG. 26 is a diagram showing an optical element constituting the above-noted polarization filter, including a linear polarizer and a periodic structure of $\lambda/2$ plates and blank portions.

FIG. 27 is a diagram showing pixel arrangement patterns of the display device that can be used in the stereoscopic image display apparatus of Embodiment 3 of the present invention.

FIG. 28 is a top view of a stereoscopic image display apparatus according to Embodiment 3.

FIG. 29 is a top view of a modification example of a stereoscopic image display apparatus according to Embodiment 3.

FIG. 30 is a front view of the parallax barrierparallax barrier in the modification example of Embodiment 3.

FIG. 31 is a diagram illustrating the problems occurring in the case that pixels are arranged in a horizontally oblong matrix.

FIG. 32 is a diagram illustrating the problems occurring in the case that pixels are arranged in a horizontally oblong matrix.

FIG. 33 is a lateral view illustrating the function of the vertical directionality control array (cylindrical lens array) in a stereoscopic image display apparatus according to Embodiment 5 of the present invention.

FIG. 34 is a lateral view illustrating the function of the vertical directionality control array (mask) in a stereoscopic image display apparatus according to Embodiment 5.

FIG. 35 is a lateral view of the stereoscopic image display apparatus according to Embodiment 5 and a table indicating the pixel lines emitting the light arriving at each of the filter lines.

FIG. 36 is a lateral view of the stereoscopic image display apparatus according to Embodiment 5 and a table indicating the pixel lines emitting the light arriving at each of the filter lines.

FIG. 37 is a front view of the display device in the stereoscopic image display apparatus according to Embodiment 5.

FIG. 38 is a lateral view of the stereoscopic image display apparatus according to Embodiment 5 and a table indicating the pixel lines emitting the light arriving at each of the filter lines.

FIG. 39 is a front view showing the transmission filter arrangement in the parallax barrierparallax barrier used in the stereoscopic image display apparatus according to FIG. 5.

FIG. 40 is a top view of the stereoscopic image display apparatus of Embodiment 5.

FIG. 41 is a top view of the stereoscopic image display apparatus of Embodiment 5.

FIG. 42 is a front view of the display device in a modified example of the stereoscopic image display apparatus according to Embodiment 5.

FIG. 43 is a lateral view of the modified example of the stereoscopic image display apparatus according to Embodiment 5 and a table indicating the pixel lines emitting the light arriving at each of the filter lines.

FIG. 44 is a front view showing the transmission filter arrangement in the parallax barrier used in the modified example of the stereoscopic image display apparatus according to FIG. 5.

FIG. 45 is a top view of the modified example of the stereoscopic image display apparatus of Embodiment 5.

FIG. 46 is a top view of the modified example of the stereoscopic image display apparatus of Embodiment 5.

FIG. 47 is a front view of the display device in a stereoscopic image display apparatus according to Embodiment 6.

FIG. 48 is a lateral view of the stereoscopic image display apparatus according to Embodiment 6 and a table indicating the pixel lines emitting the light arriving at each of the filter lines.

FIG. 49 is a front view showing the transmission filter arrangement in the parallax barrier used in the stereoscopic image display apparatus according to FIG. 6.

FIG. 50 is a front view of the display device in a modified example of the stereoscopic image display apparatus according to Embodiment 6.

FIG. 51 is a lateral view of the modified example of the stereoscopic image display apparatus according to Embodiment 6 and a table indicating the pixel lines emitting the light arriving at each of the filter lines.

FIG. 52 is a front view showing the transmission filter arrangement in the parallax barrier used in the modified example of the stereoscopic image display apparatus according to FIG. 6.

FIG. 53 is a front view of the display device in a stereoscopic image display apparatus according to Embodiment 7 of the present invention.

FIG. 54 is a lateral view of the stereoscopic image display apparatus according to Embodiment 7 and a table indicating the pixel lines emitting the light arriving at each of the filter lines.

FIG. 55 is a front view showing the transmission filter arrangement in the parallax barrier used in the stereoscopic image display apparatus according to FIG. 7.

FIG. 56 illustrates the setting of the parameters in Embodiment 7.

FIG. 57 illustrates the relation between the display device and the parallax barrier.

FIG. 58 illustrates the relation between the display device and the parallax barrier.

FIG. 59 is a front view showing the arrangement of lenticular lenses and the transmission filter arrangement of the parallax barrier in a modified example of the stereoscopic image display apparatus according to Embodiment 5.

FIG. 60 is a front view illustrating the display state of the parallax image information on the display device in a conventional stereoscopic image display apparatus.

FIG. 61 is a front view showing the image information viewed with the conventional stereoscopic image display apparatus.

The following is a detailed description of embodiments of the present invention, with reference to the accompanying drawings.

*Embodiment 1*

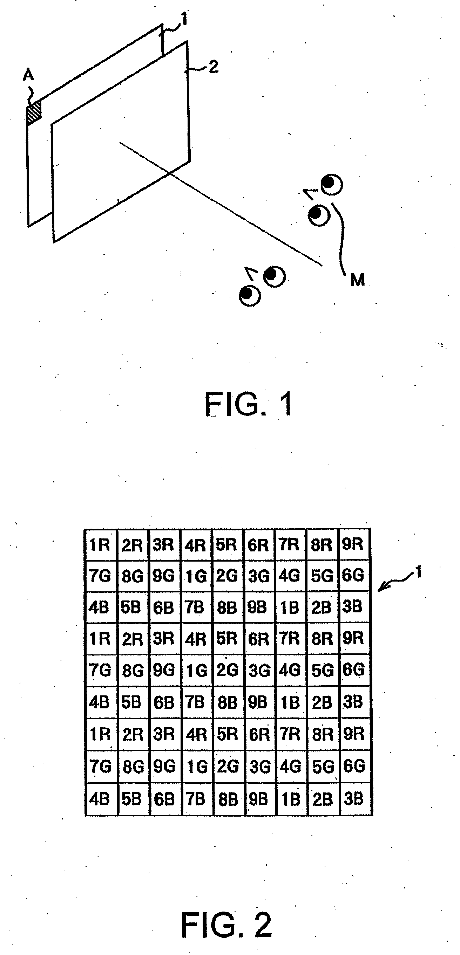

FIG. 1 is a perspective view showing the general structure of a stereoscopic image display apparatus according to Embodiment 1 of the present invention. In the present embodiment, a stereoscopic image display apparatus is configured such that stereoscopic vision with the naked eye is possible using mainly two component parts.

Numerical reference 1 denotes a display device, and may be an ordinary display device such as a liquid crystal display or a plasma display.

Reference numeral 2 denotes a parallax barrier (optical separating member), which, in combination with the display device 1, enables viewing of a plurality of parallax images independently from different directions (viewpoints). It should be noted that in the present embodiment the term "viewpoint" is not strictly limited to a point, but may also refer to a region having a certain width (viewing region).

When a viewer M views the stereoscopic image display apparatus from a predetermined distance, then stereoscopic vision with the naked eye (that is, without using any special viewing equipment) is possible. The present embodiment is particularly suited for realizing stereoscopic image display apparatuses with which stereoscopic image viewing from three or more viewpoints is possible.

FIG. 2 is an enlarged front view of the hatched portion A of the display device 1 shown in FIG. 1. The grid in FIG. 2 represents the pixel borders in the display device 1, and the expressions marked in each pixel have the following meaning:

The numerical portion of the expressions is the number of the viewpoint indicating from which viewpoint the parallax image information is viewed. The letter portion of the expression indicates to which RGB color light component the pixel corresponds. For example, "1R" is a pixel emitting a red (R) light component of the parallax image information viewed from a viewpoint 1, "7G" is a pixel emitting a green (G) light component of the parallax image information viewed from a viewpoint 7, and "4B" is a pixel emitting a blue (B) light component of the parallax image information viewed from a viewpoint 4. In this manner, all expressions represent combinations of the number of the parallax image information and the color component.

In the present embodiment, pixels at the same vertical position on the screen (image display surface), that is, a pixel group of the same horizontal row, emit light components of the same color, and horizontal rows (horizontal stripes) of pixel groups emitting an R light component, pixel groups emitting a G light component, and pixel groups emitting a B light component are lined up periodically in the vertical direction.

Moreover, the pixel arrangement shown in FIG. 2 is an example of an arrangement for stereoscopic image display by parallax image display from nine viewpoints. A method for displaying parallax images corresponding to each of nine viewpoints independently and separated from one another is explained later.

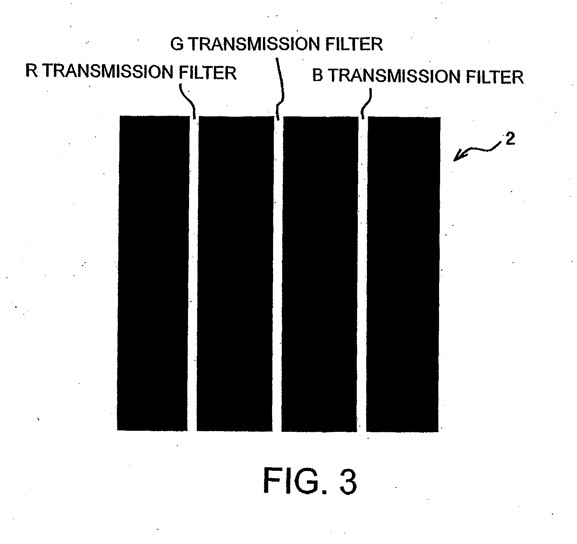

The structure of the parallax barrier 2 is shown in FIG. 3. FIG. 3 is an enlarged view of a region of the parallax barrier 2 corresponding to the region of the hatched portion A of the display device 1 shown in FIG. 1. In actuality, the structure shown in FIG. 3 is arranged periodically across the entire parallax barrier 2. The black portions in FIG. 3 represent light-blocking regions. On the other hand, the white portion represents slit regions (in the following referred to as "filters") through which light is transmitted. However, the three filters in FIG. 3 have different transmission characteristics for the individual color components of the light (that is, for the wavelength regions of the light).

In FIG. 3, the filter on the left side is an R transmission filter that transmits an R light component and intercepts light of other color components, the filter in the middle in FIG. 3 is a G transmission filter that transmits a G light component and intercepts light of other color components, and the filter on the right side is a B transmission filter that transmits a B light component and intercepts light of other color components

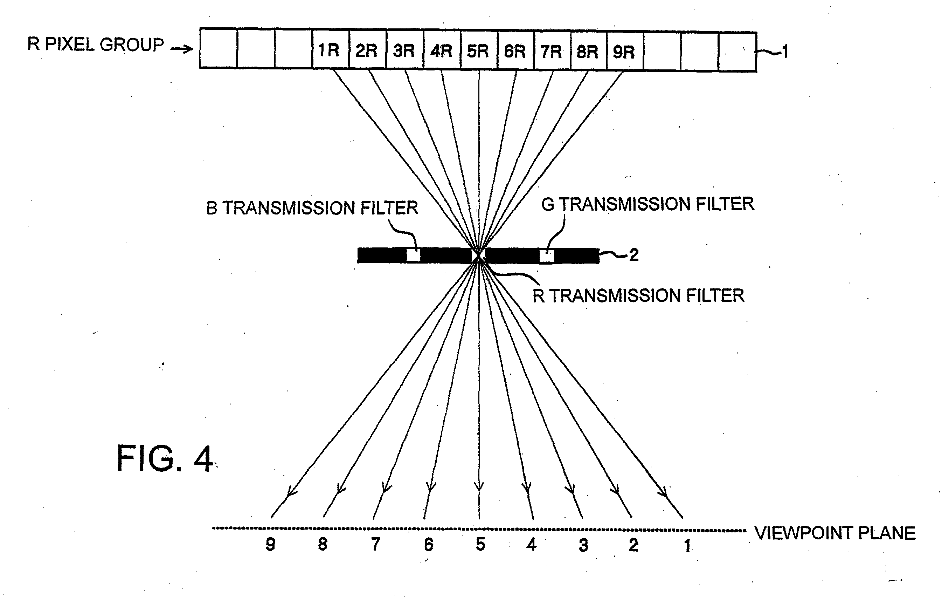

Referring to FIGS. 4 to 7, the following is a description of a method for stereoscopic display using this apparatus. FIG. 4 is a top view of the apparatus. As mentioned before, in the present embodiment, parallax images from nine viewpoints are displayed independently and separated from one another.

The plane denoted by the dotted line in the figures is the viewpoint plane. It is presumed that the viewpoints (1, 2, 3, ... 9) of the parallax images are lined up on this plane.

FIG. 4 shows how the R light components arrives a the viewpoints. The R light components emitted from the R pixel group on the display device 1 are transmitted only through the R transmission filter on the parallax barrier 2 and are blocked by the other portions. Consequently, if the horizontal width of the R transmission filters (slits) is sufficiently thin, for example the horizontal width of one pixel or less, then the directionality of the light will be high. That is to say, the emergence direction after the light emitted from each pixel has emerged from the R transmission filter is determined by the straight line through the center of the pixels and the center of the R transmission filter, as shown in FIG. 4.

In this case, the viewpoint numbers of the pixels of the R pixel group are arranged such that the viewpoints with the numbers 1, 2, 3, ... 9 are lined up from right to left on the viewpoint plane, as shown in FIG. 4. That is to say, only the R light component of the parallax image information having the corresponding viewpoint number can be viewed from the individual viewpoints.

For example, only the pixel 4R can be viewed from the viewpoint 4 on the viewpoint plane. In the present embodiment, also for the image information light of other color components, the relation between the display device 1 and the parallax barrier 2 is set such that predetermined parallax image information can be viewed from a predetermined viewpoint position.

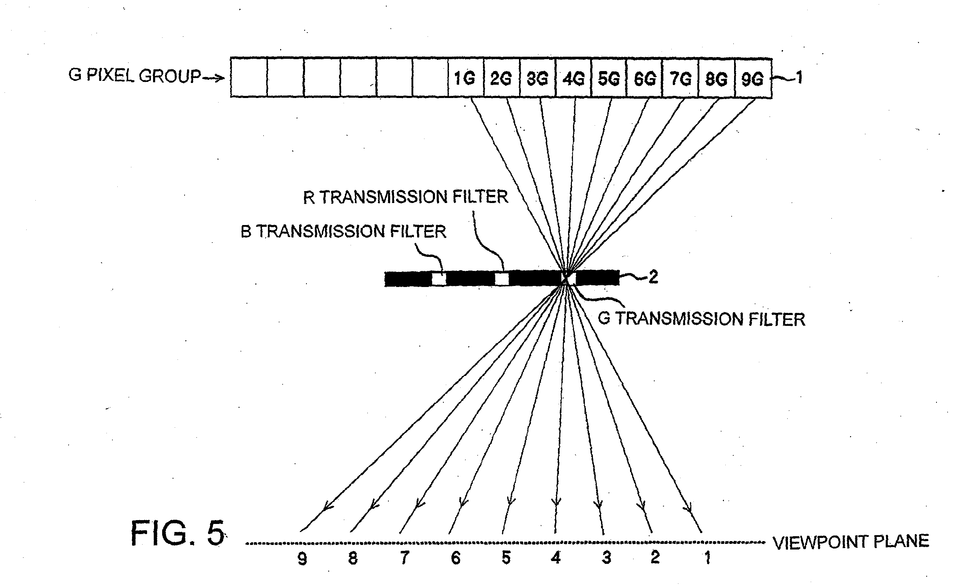

FIG. 5 shows how the G light components arrive at the viewpoints. The G light components emitted from the G pixel groups on the display device 1 are transmitted only through the G transmission filter on the parallax barrier 2 and are blocked by the other portions. Moreover, the viewpoint numbers of the pixels of the G pixel group on the display device 1 are arranged such that the viewpoints with the numbers 1, 2, 3, ... 9 are lined up from right to left on the viewpoint plane, as shown in FIG. 5.

That is to say, only the light of the G component of the parallax image information having the corresponding viewpoint number can be viewed from the individual viewpoints. For example, only the pixel 4G can be viewed from the viewpoint 4 on the viewpoint plane.

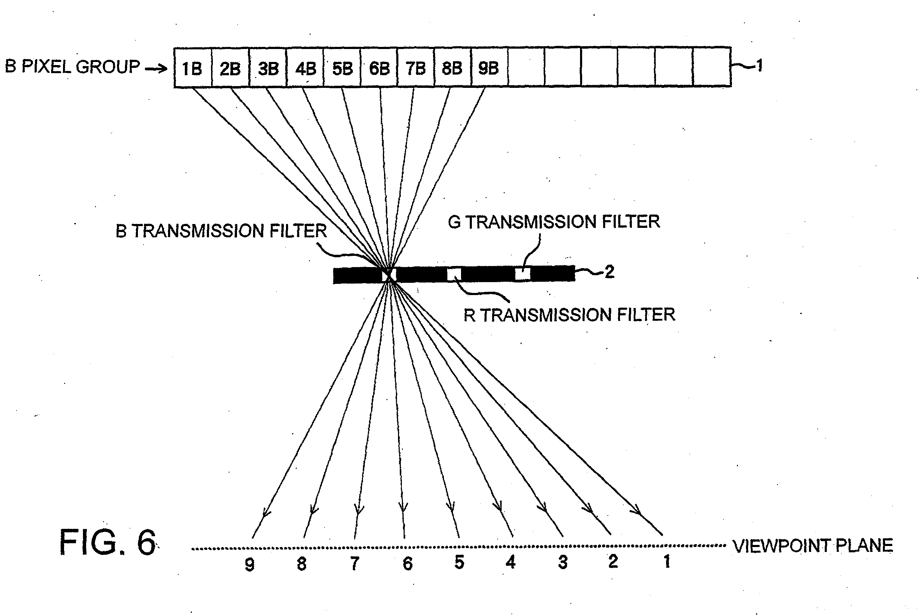

Similarly, as shown in FIG. 6, also the B light components emitted from the B pixel group on the display device 1 are transmitted only through the B transmission filter on the parallax barrier 2 and are blocked by the other portions. Thus, only the B light component of the parallax image information having the corresponding viewpoint number can be viewed from the individual viewpoints. For example, only the pixel 4B can be viewed from the viewpoint 4 on the viewpoint plane.

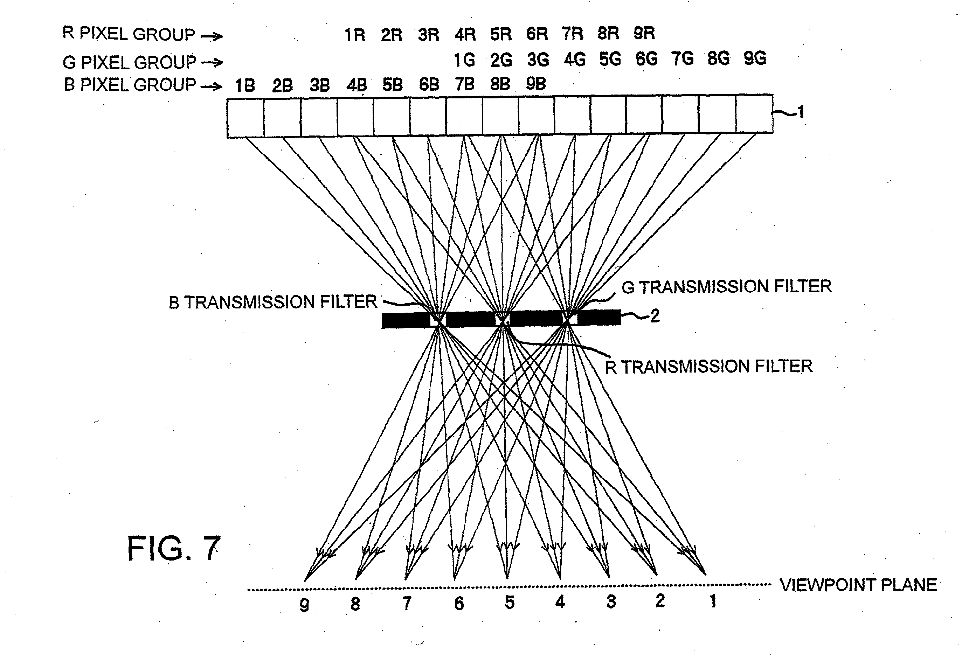

In actuality, all of the three image groups for RGB are present on the display device 1, and all of the three filters for RGB are present on the parallax barrier 2, so that, as shown in FIG. 7, a state is attained that is a superposition of the states shown in FIG. 4 to 6.

That is to say, in the present embodiment, for each of the RGB color components, only the parallax image light displayed by the pixels having the corresponding viewpoint numbers can be viewed from the individual viewpoints on the viewpoint plane. In other words, the present embodiment is a display apparatus with which parallax images can be viewed in full color from each of nine viewpoints, and automatic stereoscopic vision is possible by arranging the left and right eyes of a person viewing this display apparatus at different viewpoints to view different parallax images.

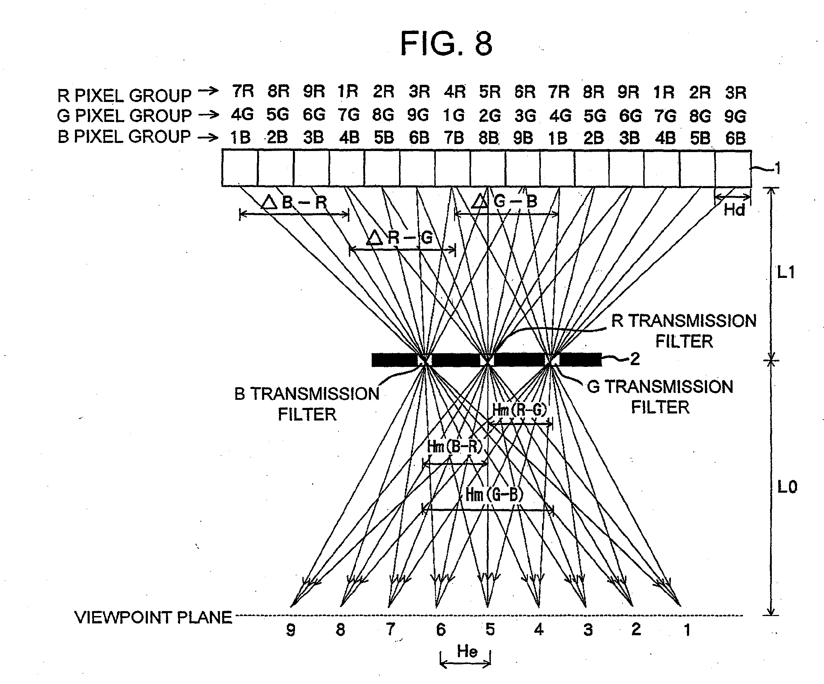

Referring to FIG. 8, the following is a description of the geometric arrangement for realizing the structure described above.

When L1 is the distance between the display device 1 and the parallax barrier 2, L0 is the distance from the parallax barrier 2 to the viewpoint plane, $H_d$ is the pixel pitch, and $H_e$ is the viewpoint pitch, then the following relation exists between those parameters due to their geometric relation:

$$(1) \qquad \frac{Hd}{He} = \frac{L1}{L0}$$

On the other hand, the intervals between the color transmission filters on the parallax barrier 2 depend on the relative shift between the pixel groups on the display device 1. In the R, G and B pixel groups, pieces of the parallax image information corresponding to the viewpoint numbers 1 to 9 are arranged in repetition as a sequence (that is, the parallax images are synthetically displayed), but the sequence start positions of the respective pixel groups (for example, the positions of the pixels for the viewpoint number 1) are shifted in the horizontal direction with respect to each other. This is because the viewpoint position is shared by all colors, whereas the intermediate optical paths (that is, the position of the transmission filter of each color) differ.

When $\Delta_{R-G}$ (shown as "ΔR-G" in the figure) is the relative shift between the R pixel group and the G pixel group, $\Delta_{G-B}$ (shown as "ΔG-B" in the figure) is the relative shift between the G pixel group and the B pixel group, $\Delta_{B-R}$ (shown as "ΔB-R" in the figure) is the relative shift between the B pixel group and the R pixel group, $H_{m(R-G)}$ (shown as "Hm(R-G)" in the figure) is the interval between the R transmission filter and the G transmission filter, $H_{m(G-B)}$ (shown as "Hm(G-B)" in the figure) is the interval between the G transmission filter and the B transmission filter, and $H_{m(B-R)}$ (shown as "Hm(B-R)" in the figure) is the interval between the B transmission filter and the R transmission filter, then the following relation exists between those parameters due to their geometric relation.

$$(2) \qquad \frac{\Delta_{R-G}}{H_{m(R-G)}} = \frac{Li}{L_0}, \qquad \frac{\Delta_{IG-B}}{H_{m(G-B)}} = \frac{L_1}{L_0}, \qquad \frac{\Delta_{B-R}}{H_{m(B-R)}} = \frac{L_1}{L_0}$$

Considering the difficulty of the manufacturing process of the parallax barrier 2, it is preferable that the intervals between the color transmission filters are the same, and in this case, the following relation can be derived from the foregoing equation:

$$(3) \qquad \Delta_{R-G} = \Delta_{G-B} = \Delta_{B-R}$$

And since $\Delta_{R-G}+\Delta_{G-B}+\Delta_{B-R}=9H_d$:

$$(4) \qquad \Delta_{R-G} = \Delta_{G-B} = \Delta_{B-R} = 3H_d$$

In the explanations up to here, nine viewpoints to the front were considered as the viewpoints, and only three transmission filters on the parallax barrier 2 are shown, but these can be expanded in the horizontal direction.

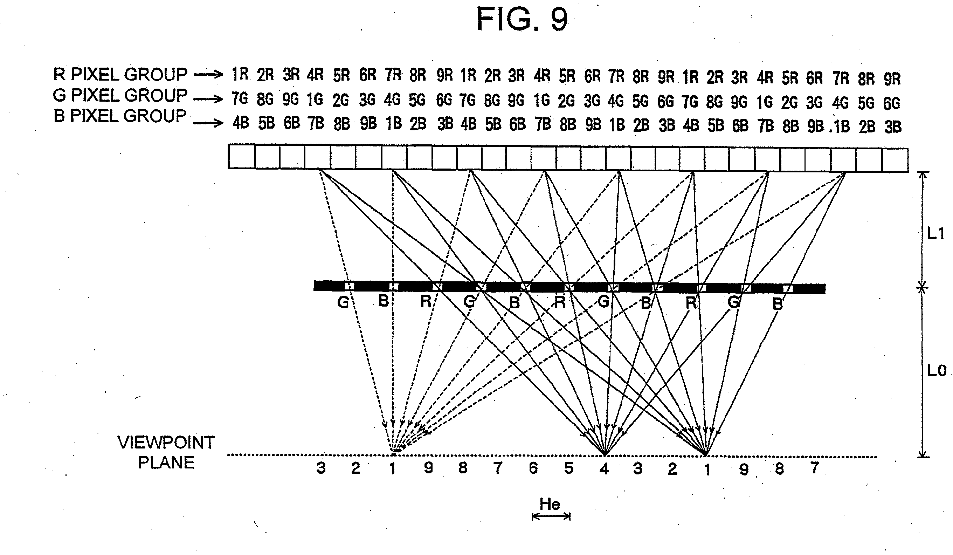

FIG. 9 shows how the light from the display device 1 reaches the various viewpoints if the above-described component parts are expanded in the horizontal direction. The design parameters of the component parts all satisfy the Equations (1) to (4). The viewpoints are arranged periodically in sequences of 1 through 9, and also the RGB color filters are arranged periodically on the parallax barrier 2. Moreover, the arrangement of the color pixel groups on the display device 1 is a periodic arrangement of the pixels corresponding to the viewpoint numbers 1 to 9.

For reasons of simplification, FIG. 9 shows only the trajectories of the light focused on the viewpoint 1 and the light focused on the viewpoint 4. Also when the component parts are expanded in the horizontal direction, the light rays of all RGB colors converge correctly on the corresponding viewpoints. Moreover, the light rays from the pixels of the corresponding viewpoint numbers arrive correctly not only at the viewpoints to the front, but also at the viewpoints expanded in the horizontal direction. For example, the pixel from which the light rays are emitted is the same for the light converging at the viewpoint 1 on the right side (whose trajectories are indicated by solid lines) and the light converging at the viewpoint 1 on the left side (whose trajectories are indicated by dotted lines), but the parallax barrier 2 establishes such a relation that those light rays do not arrive at viewpoints other than the viewpoints 1. This is repeated across the entire surface of the display device 1.

This characteristic is also given for all other viewpoints, and in the present embodiment, the light rays of the respectively corresponding parallax image information reach all viewpoints independently.

It should be noted that in FIG. 9, a case is shown in which the intervals between the filters on the parallax barrier 2 are the same, but also when the intervals between the filters are not the same, the same effect as shown in FIG. 9 can be attained.

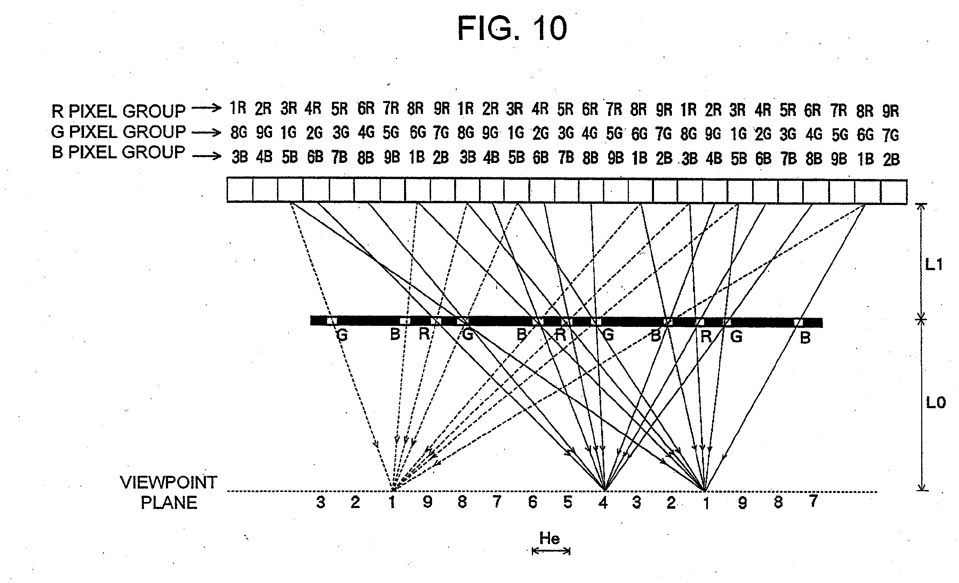

FIG. 10 is a diagram of an embodiment of this case. In this case, the Equations (1) and (2) of the parameter relations given above are satisfied, but Equations (3) and (4) are not satisfied.

The positional relation between the pixel groups is given by:

$$(5) \qquad \Delta_{R-G} = 2H_d , \Delta_{G-B} = 5H_d , \Delta_{B-R} = 2H_d$$

In order to realize equidistant viewpoints for a pixel arrangement as in Equation (5), the filter distances on the parallax barrier 2 become non-equidistant. From Equation (2) and Equation (5), the filter distances become:

$$(6) \qquad H_{m(R-G)} = 2H_d , H_{m(G-B)} = 5H_d , H_{m(B-R)} = 2H_d$$

If Equation (5) is true for the display device 1 and Equation (6) is true for the parallax barrier 2, then the trajectories of the light become as shown in FIG. 10. For simplification, only the trajectories of light converging on the viewpoint 1 and light converging on the viewpoint 4 are shown in FIG. 10.

From FIG. 10, it can be seen that the light rays of all RGB color components converge correctly on the corresponding viewpoint positions, even if the component parts are expanded in the horizontal direction. Moreover, it can be seen that the light rays from the pixels of the corresponding viewpoint numbers arrive correctly not only at the viewpoints to the front, but also at the viewpoints expanded in the horizontal direction.

For example, the pixel from which the light rays are emitted is the same for the light converging at the viewpoint 1 on the right side (whose trajectories are indicated by solid lines) and the light converging at the viewpoint 1 on the left side (whose trajectories are indicated by dotted lines), but the parallax barrier 2 establishes such a relation that those light rays do not arrive at viewpoints other than the viewpoints 1. This is repeated across the entire surface of the display device 1.

This characteristic is also given for all other viewpoints, and in the present embodiment, the light rays of the respectively corresponding parallax image information reach all viewpoints independently.

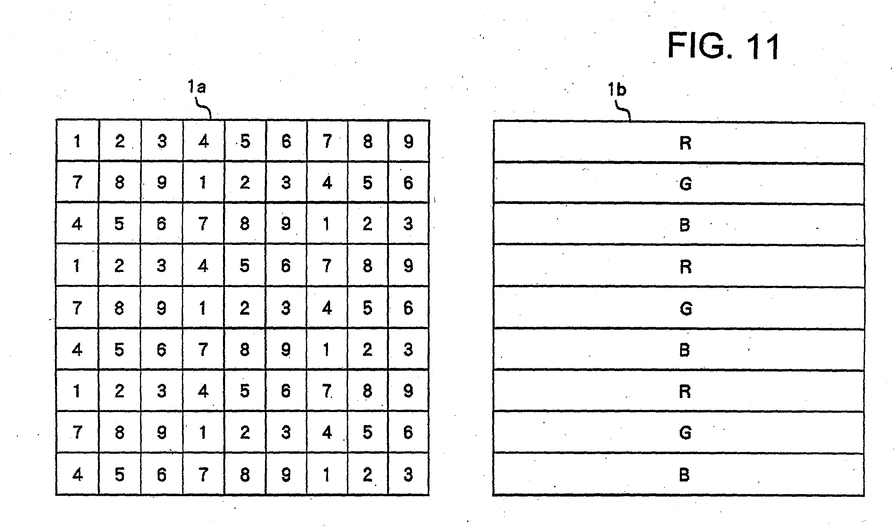

It should be noted that the luminance information and the color information do not necessarily have to be represented by only one part of the display device 1. As shown in FIG. 11, it is also possible that a monochrome display device 1a expressing only luminance information and a periodic color filter 1b are fabricated individually, and the apparatus is configured by using these in superposition. Thus, the versatility and the design freedom of the display device 1 are increased.

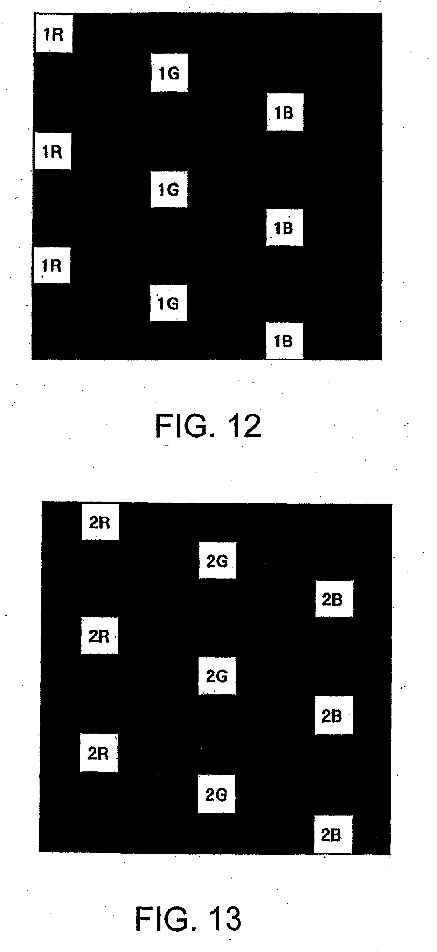

The following is an explanation of the effect of the present embodiment, with reference to FIGS. 12 and 13. As can be seen in FIGS. 9 and 10, with the present embodiment, the light from a plurality of pixels of different color components and vertical positions converges on one viewpoint. For example, when the screen is viewed from the position of the viewpoint 1, then the pixels with the viewpoint number 1 can be viewed strewn vertically and horizontally over the screen, as shown in FIG. 12. Similarly, if the screen is viewed from the position of the viewpoint 2, then the pixels with the viewpoint number 2 can be viewed strewn vertically and horizontally over the screen, as shown in FIG. 13, and this is similar the other viewpoints.

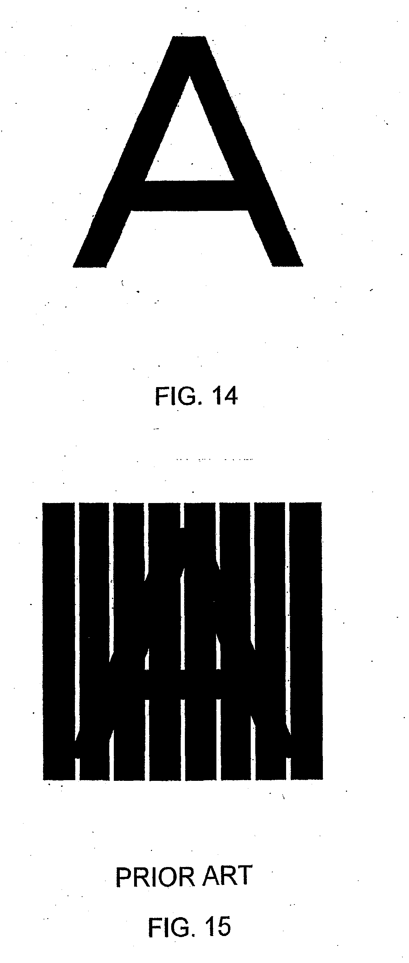

The advantageous effect of the present embodiment will be appreciated in a comparison with FIG. 61, which is a front view of a conventional stereoscopic image display apparatus enabling viewing from many viewpoints. That is to say, conventionally, the deterioration phenomenon of the image resolution during the stereoscopic image display occurs only with respect to the horizontal direction, so that the viewer perceives striking discontinuities in the image, whereas with the present embodiment, the deterioration of the image resolution is dispersed in both direction, vertically and horizontally, so that the discontinuities in the viewed image are not conspicuous. How this effect appears in actual parallax images is explained with reference to FIGS. 14 to 16.

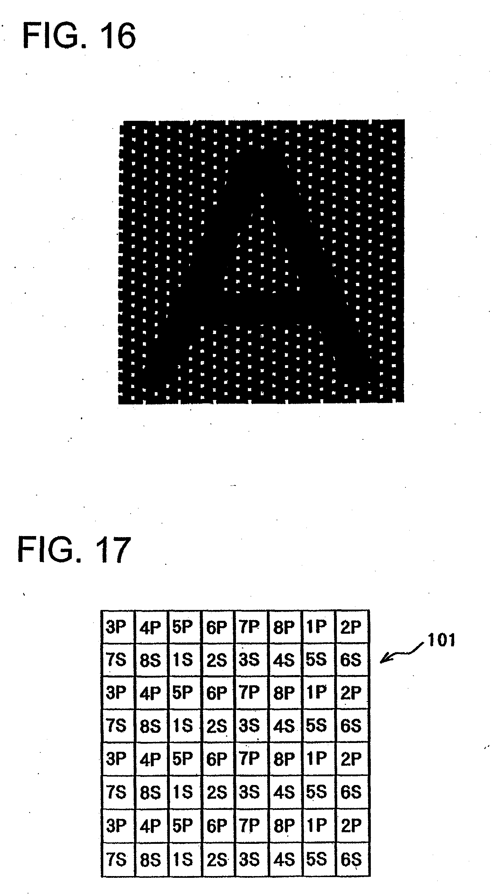

FIG. 14 shows an original parallax image viewed from one viewpoint. FIGS. 15 and 16 respectively illustrate the case that the original parallax image is viewed with a conventional multi-viewpoint stereoscopic image display apparatus and the case that the original parallax image is viewed with the apparatus of the present embodiment. The number of viewpoints is nine in either case.

In FIG. 15, only the resolution in the horizontal direction is reduced to 1/9, so that the image becomes rather discontinuous, and it is difficult to infer the information of the original image shown in FIG. 14.

In FIG. 16, on the other hand, the resolution in the vertical direction as well as the resolution in the horizontal direction is reduced to 1/3, and the discontinuities in the image are much more subdued than in FIG. 15, so that the information of the original image shown in FIG. 14 is easy to infer.

*Embodiment 2*

In Embodiment 1, the multi-viewpoint stereoscopic image display apparatus is configured such that pixels for each of the three color components R, G and B are grouped together on the display device 1, and the image light from those pixel groups is separated by transmission filters corresponding to the three color components R, G and B on the parallax barrier 2, but in the present embodiment not the differences between the colors R, G and B, but differences in the polarization state of the light are used as the method for separating the image light.

As in Embodiment 1, the arrangement of the display device 101 and the parallax barrier 102 in the present embodiment is as shown in FIG. 1. However in the present embodiment, in order to separate the light according to the polarization direction of the light, the structure of each member is different.

FIG. 17 shows the pixel arrangement in a region (corresponding to region A in FIG. 1) on the display device 101 of the present embodiment. The expressions assigned to each of the pixels have the following meaning: The numerical portion of the expressions represents the number of the viewpoint indicating from which viewpoint the parallax image information is viewed. The letter portion of the expression indicates to which of two types of light components having different polarization states (perpendicular polarization directions) the pixel corresponds.

For example, "1P" is a pixel with parallax image information viewed from the viewpoint 1 and at which light P with a first polarization state originates (P pixel), and "7S" is a pixel with parallax image information viewed from the viewpoint 7 and at which light S with a second polarization state originates (S pixel), thus representing a combination of the number of the parallax image information and the polarization state.

In the present embodiment, pixels at the same vertical position on the screen, that is, pixel groups of the same horizontal rows emit light of the same polarization state, and horizontal rows (horizontal stripes) of pixel groups emitting first polarization state light P and pixel groups emitting second polarization state light S are arranged periodically in the vertical direction. This enables the display device 101 to synthetically display a plurality of parallax images by different pixels.

Moreover, the pixel arrangement shown in FIG. 17 is an example of an arrangement for realizing a stereoscopic image display apparatus allowing stereoscopic image viewing from eight viewpoints. The following is a more detailed description of a method for independently and separately displaying to the eight viewpoints the parallax image corresponding to the respective viewpoint.

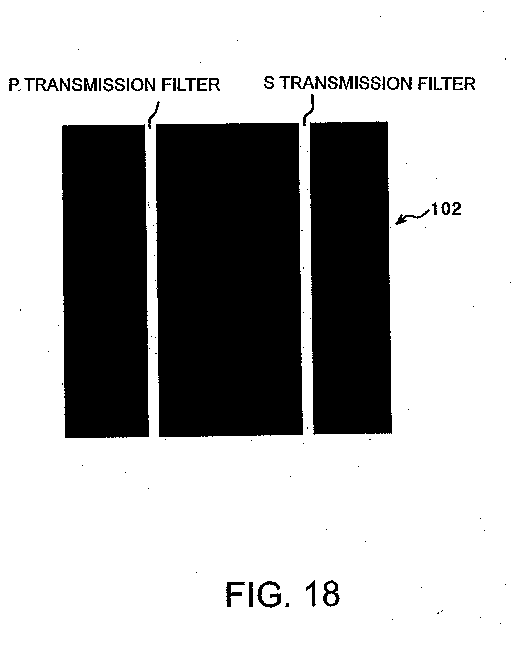

FIG. 18 shows the structure of the parallax barrier 102. FIG. 18 is an enlarged view of a region of the parallax barrier 102 corresponding to the region of the display device 101 shown in FIG. 17, and in actuality, this structure is periodically arranged over the entire parallax barrier 102.

The black portions in FIG. 18 represent light-blocking regions. On the other hand, the white portions represent slit regions (in the following referred to as "transmission filters") through which light is transmitted. The two transmission filters in FIG. 18 have different transmission characteristics for different polarization states of the light. The left filter in FIG. 18 is a P transmission filter, which transmits first polarization state light P and intercepts second polarization state light S. The right filter in FIG. 18 is an S transmission filter, which transmits second polarization state light S and intercepts light first polarization state light P.

Here, the above-mentioned first and second polarization states can be defined as "a combination of light of two different phase states which can be separated substantially completely from the mixed state using an optical element." This means in particular "a combination in which the phase difference between the phase states of the two types of light is $\Pi$."

To give an example, a combination of two linearly polarized light components whose polarization planes are perpendicular to one another can be separated into independent light components with two linear polarizers whose polarization axes are arranged at right angles. Moreover, also a right-handed circularly polarized light component and a left-handed circularly polarized light component can be separated into individual light components by combining a 1/4-wave plate with two linear polarizers whose polarization axes are arranged at right angles.

Ordinarily, "P-polarized light and S-polarized light" means a combination of linearly polarized light components with perpendicular polarization planes, but in the present embodiment there is no limitation to this meaning, and "a first polarization state light P and a second polarization state light S" is used in the meaning of the above-noted definition.

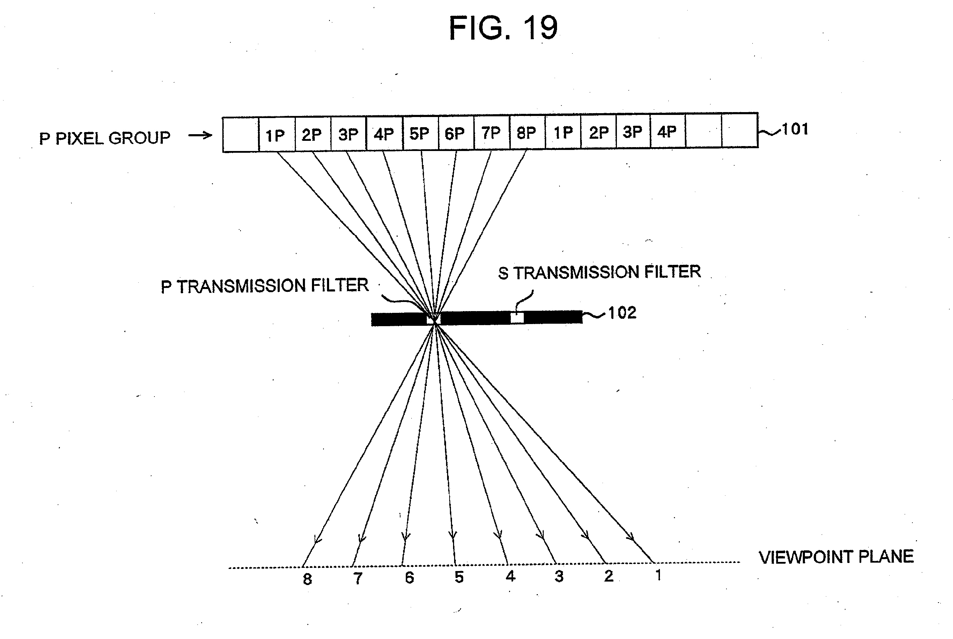

Referring to FIGS. 19 to 21, which are top views of the apparatus according to the present embodiment, the following is a description of a method for stereoscopic image display using this apparatus. As mentioned above, in the present embodiment, parallax images can be viewed independently and separately from eight viewpoints.

The plane indicated by the dotted line in these figures is the viewpoint plane. It is presumed that the viewpoints (1, 2, 3, ... 8) of the parallax images are lined up on this plane.

FIG. 19 shows how the first polarization state light P from the display device 101 arrives at each of the viewpoints. The first polarization state light P is emitted from the P pixel groups on the display device 101. The first polarization state light P is transmitted only through the P transmission filter on the parallax barrier 102 and is blocked by the other portions. Consequently, if the width of the P transmission filters (slits) is sufficiently thin, then the directionality of the light will be high. That is to say, the emergence direction after the light emitted from each pixel has emerged from the P transmission filter is determined by the straight line through the center of the pixels and the center of the P transmission filter, as shown in FIG. 19.

In this case, the viewpoint numbers of the pixels of the P pixel group are arranged such that the viewpoints with the numbers 1, 2, 3, ... 8 are lined up from right to left on the viewpoint plane, as shown in FIG. 19. That is to say, only the first polarization state light P of the parallax image information having the corresponding viewpoint number can be viewed from the individual viewpoints. For example, only the pixel 4P can be viewed from the viewpoint 4 on the viewpoint plane.

In the present embodiment, also for the other image information light due to the second polarization state light S, the relation between the display device 101 and the parallax barrier 102 is set such that corresponding parallax image information can be viewed from predetermined viewpoint positions.

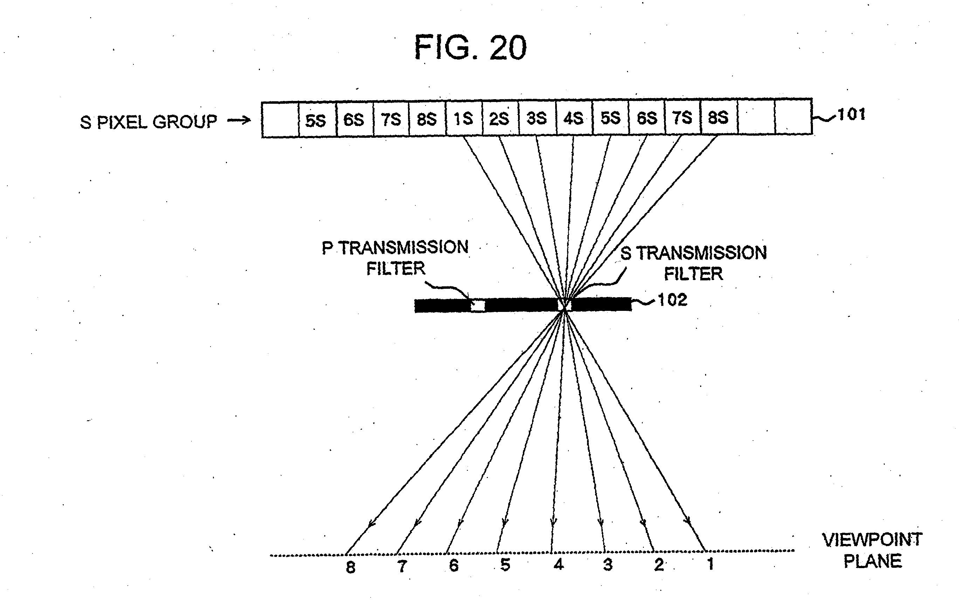

FIG. 20 shows how the second polarization state light S from the display device 101 reaches each of the viewpoints. The second polarization state light S is emitted from the S pixel groups on the display device 101. The second polarization state light S is transmitted only through the S transmission filter on the parallax barrier 102 and is blocked by the other portions.

Also the viewpoint numbers of the pixels of the S pixel group are arranged such that the viewpoints with the numbers 1, 2, 3, ... 8 are lined up from right to left on the viewpoint plane, as shown in FIG. 20. That is to say, only the second polarization state light S of the parallax image information having the corresponding viewpoint number can be viewed from the individual viewpoints. For example, only the pixel 4S can be viewed from the viewpoint 4 on the viewpoint plane.

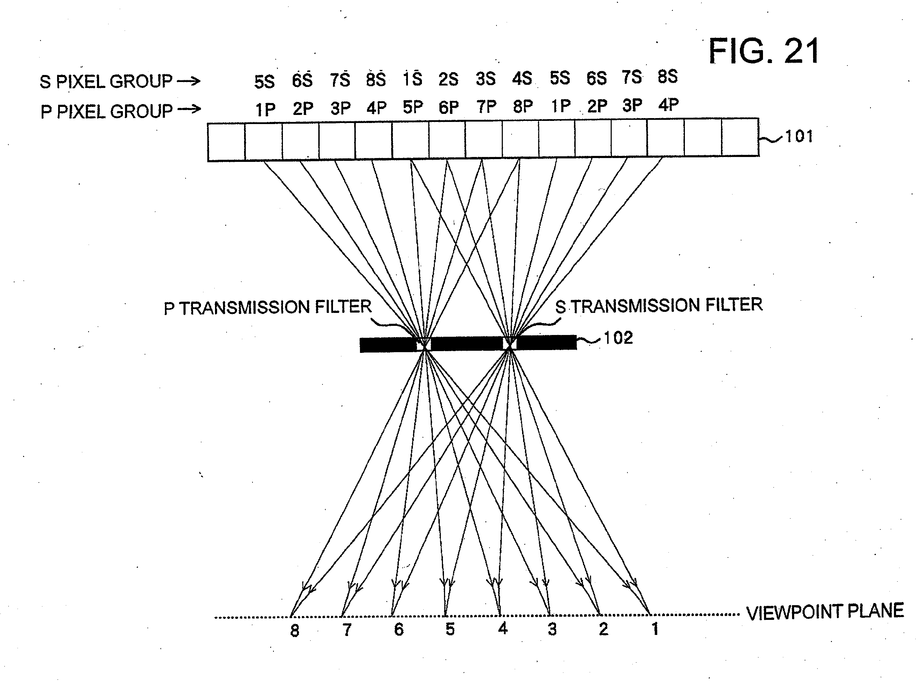

In actuality, both P and S pixel groups are present on the display device 101, and both P and S transmission filters are present on the parallax barrier 102, so that, as shown in FIG. 21, a state is attained that is a superposition of the states shown in FIG. 19 and 20. That is to say, in the present embodiment, for both the light with the P polarization state and the light with the S polarization state, only the parallax image information light having the corresponding viewpoint number can be viewed from the individual viewpoints on the viewpoint plane. In other words, the present embodiment is a display apparatus with which parallax images can be viewed from each of eight viewpoints, and automatic stereoscopic vision is possible by arranging the left and right eyes of a person viewing this display apparatus at different viewpoints to view different parallax images.

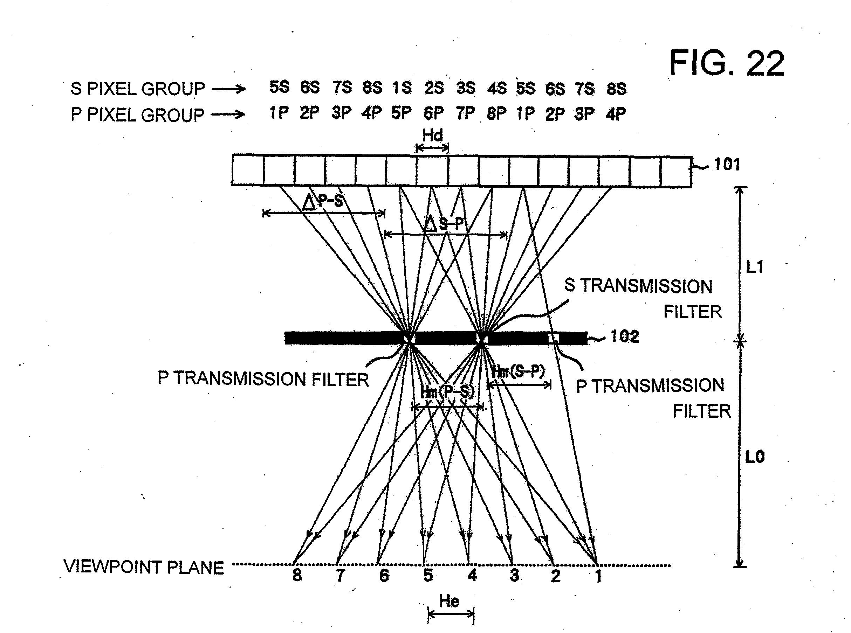

Referring to FIG. 22, the following is a description of the geometric arrangement for realizing the structure described above. When L1 is the distance between the display device 101 and the parallax barrier 102, L0 is the distance from the parallax barrier 102 to the viewpoint plane, $H_d$ is the pixel pitch, and He is the viewpoint pitch, then the following relation exists between those parameters due to their geometric relation:

$$(1) \qquad \frac{H_d}{H_e} = \frac{L_1}{L_0}$$

This Equation (1) is the same as Equation (1) explained in Embodiment 1.

On the other hand, the intervals between the color transmission filters on the parallax barrier 102 depend on the relative shift between the pixel groups on the display device 101. In the pixel groups, pieces of the parallax image information corresponding to the viewpoint numbers 1 to 8 are arranged in repetition as a sequence, but the sequence start positions in the pixel groups (for example, the positions of the pixels for the viewpoint number 1) are shifted in the horizontal direction. This is because one viewpoint position is shared by all polarization states, whereas the intermediate optical paths (that is, the position of the transmission filter of each polarization state) differ.

When $\Delta_{P-S}$ (shown as "ΔP-S" in the figure) is defined as the relative shift between the P pixel group and the next S pixel group, $\Delta_{S-P}$ (shown as "ΔS-P" in the figure) is defined as the relative shift between the S pixel group and the next P pixel group, $H_{m(P-S)}$ (shown as "Hm(P-S)" in the figure) is defined as the interval between the P transmission filter and the next S transmission filter, and $H_{m(S-P)}$ (shown as "Hm(S-P)" in the figure) is defined as the interval between the S transmission filter and the next P transmission filter, then the following relation exists between those parameters due to their geometric relation.

$$(2') \qquad \frac{\Delta_{P-S}}{H_{m(P-S)}} = \frac{L_1}{L_0} \,, \frac{\Delta_{S-P}}{H_{m(S-P)}} = \frac{L_1}{L_0}$$

Considering the difficulty of the manufacturing process of the parallax barrier 102, it is preferable that the intervals between the filters are the same, and in this case, the following relations are given:

$$(3') \qquad \Delta_{P-S} = \Delta_{S-P}$$

And since $\Delta_{P-S} + \Delta_{S-P} = 8H_d$ :

$$(4') \qquad \Delta_{P-S} = \Delta_{S-P} = 4H_d$$

In the explanations up to here, only the eight viewpoints to the front were considered as the viewpoints, and only two transmission filters on the parallax barrier 102 are shown, but these can be expanded in the horizontal direction.

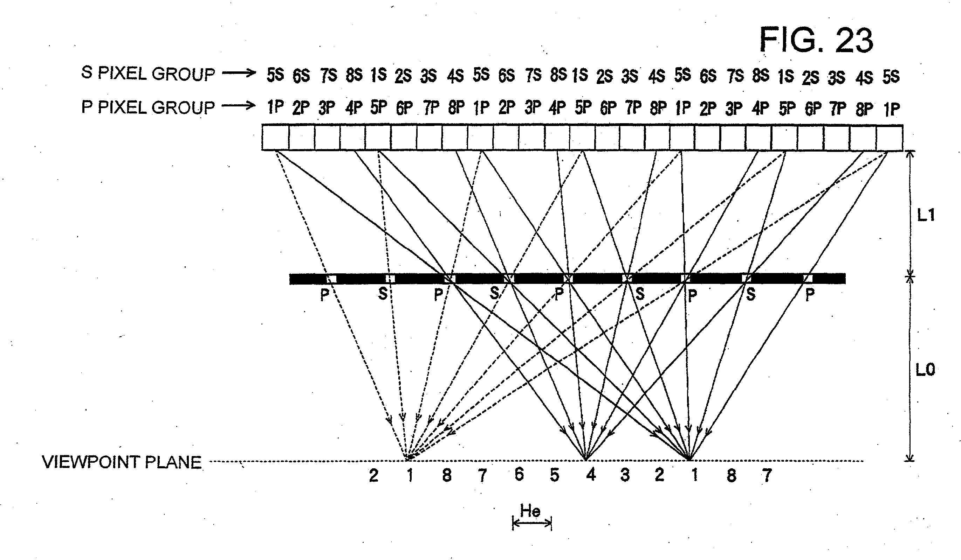

FIG. 23 shows how the light from the display device 101 reaches the various viewpoints if the above-described component parts are expanded in the horizontal direction. The design parameters of the component parts all satisfy the Equations (1) and (2)' to (4)'. The viewpoints are arranged periodically in sequences of 1 through 8, and also the P transmission filters and S transmission filters are arranged periodically on the parallax barrier 102. Moreover, the arrangement of the P pixel groups and S pixel groups is a periodic arrangement of the pixels corresponding to the viewpoint numbers 1 to 8.

For reasons of simplification, FIG. 23 shows only the trajectories of the light focused on the viewpoint 1 and the light focused on the viewpoint 4. It can be seen from FIG. 23 that also when the component parts are expanded in the horizontal direction, the first polarization state light P and the second polarization state light S converge correctly on the corresponding viewpoints. Moreover, the light rays from the pixels of the corresponding viewpoint numbers arrive correctly not only at the viewpoints to the front, but also at the viewpoints expanded in the horizontal direction. For example, the pixel from which the light rays are emitted is the same for the light converging at the viewpoint 1 on the right side (whose trajectories are indicated by solid lines) and the light converging at the viewpoint 1 on the left side (whose trajectories are indicated by dotted lines), but the parallax barrier 102 establishes such a relation that those light rays do not arrive at viewpoints other than the viewpoints 1. This is repeated across the entire surface of the display device 101.

This characteristic is also given for all other viewpoints. Thus, in the present embodiment, the light rays of the respectively corresponding parallax image information reach all viewpoints independently.

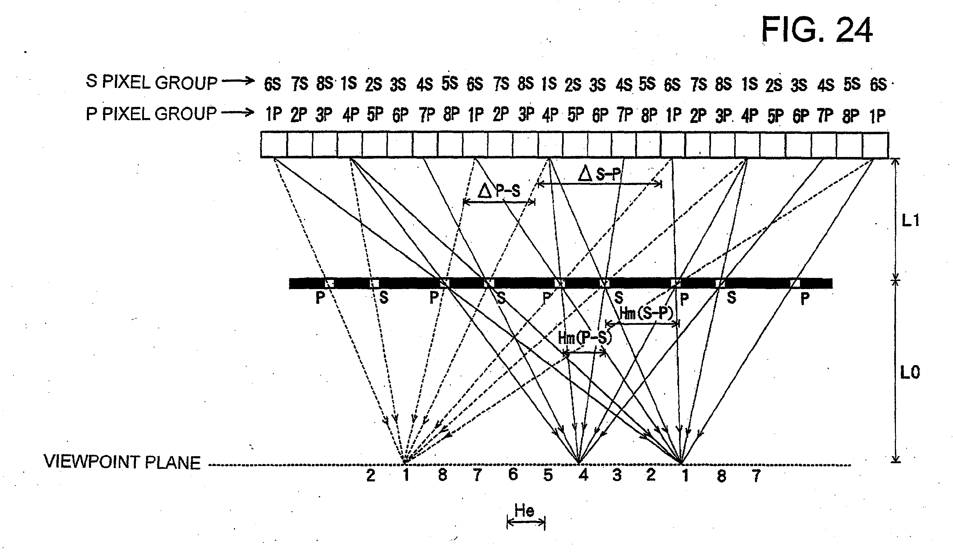

It should be noted that in FIG. 23, a case is shown in which the intervals between the filters on the parallax barrier 102 are the same, but also when the intervals between the filters are not the same, the same effect as in the present embodiment can be attained. FIG. 24 is a diagram of an embodiment of such a case.

In this case, the Equations (1) and (2)' of the parameter relations given above are satisfied, but Equations (3)' and (4)' are not satisfied.

Here, the positional relation between the pixel groups is given by:

$$(5') \qquad \Delta_{P-S} = 3H_d , \Delta_{S-P} = 5H_d$$

In order to realize equidistant viewpoints for a pixel arrangement as in Equation (5)' , the filter intervals on the parallax barrier 102 become non-equidistant. From Equation (2)' and Equation (5)', the filter intervals become:

$$(6') \qquad H_{m(P-S)} = 3H_d , H_{m(S-P)} = 5H_d$$

If Equation (5)' is true for the display device 101 and Equation (6) is true for the parallax barrier 102, then the trajectories of the light become as shown in FIG. 24.

For simplification, only the trajectories of light converging on the viewpoint 1 and light converging on the viewpoint 4 are shown in FIG. 24. It can be seen that the light of both the P and S polarization states converges correctly on the corresponding viewpoint positions, even if the component parts are expanded in the horizontal direction. Moreover, it can be seen that the light rays from the pixels of the corresponding viewpoint numbers arrive correctly not only at the viewpoints to the front, but also at the viewpoints expanded in the horizontal direction. For example, the pixel from which the light rays are emitted is the same for the light converging at the viewpoint 1 on the right side (whose trajectories are indicated by solid lines) and the light converging at the viewpoint 1 on the left side (whose trajectories are indicated by dotted lines), but the parallax barrier 102 establishes such a relation that those light rays do not arrive at viewpoints other than the viewpoints 1. This is repeated across the entire surface of the display device 101.

This characteristic is also given for all other viewpoints, and in the present embodiment, the light rays of the respectively corresponding parallax image information reach all viewpoints independently.

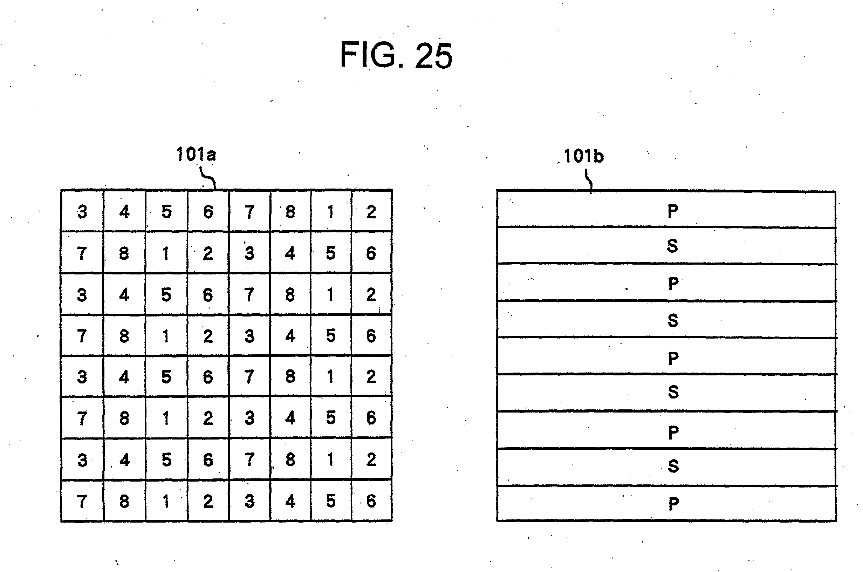

It should be noted that the color and luminance information of the image and the polarization state do not necessarily have to be expressed by only one component part in the display device 101. As shown in FIG. 25, it is also possible that a display device 101a expressing only color and luminance information and a periodic polarization filter 101b are fabricated individually, and the apparatus is configured by using these in superposition.

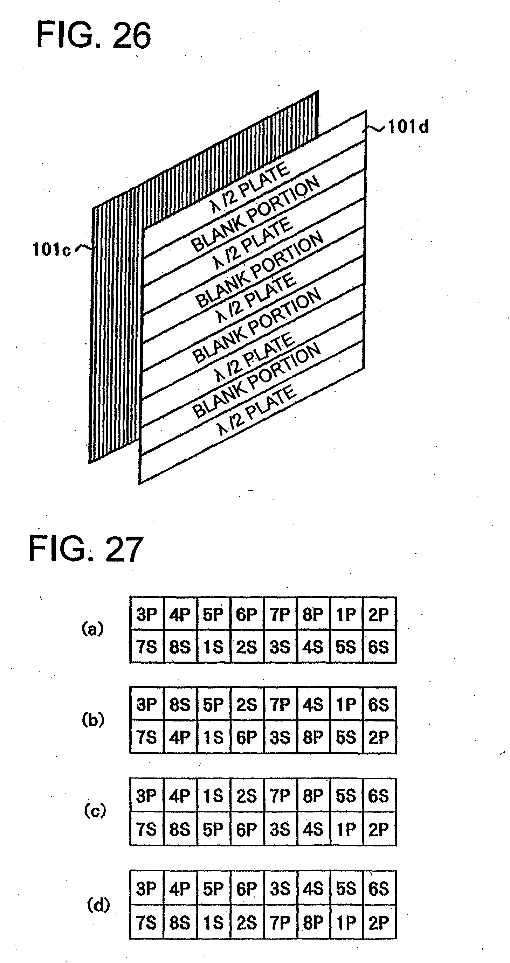

Thus, the versatility and the design freedom of the display device are increased. In particular with the approach of using a periodical polarization filter 101b, it is conceivable to combine a linear polarizer 101c and an optical element 101d having a periodical structure of 1/2-wave plates and "blank portions" that do not affect the phase of the light, as shown in FIG. 26.

With this structure, linearly polarized light having a polarization axis that coincides with the polarization axis of the linear polarizer 101c emerges from the blank portions, and linearly polarized light having a polarization axis which is at right angles to the polarization axis of the linear polarizer 101c emerges from the 1/2-wave plates, so that if the former is used for the first polarization state light P and the latter is used for the second polarization state light S, it is possible to obtain a polarization filter 101b fulfilling the purpose of the present embodiment.

It should be noted that also in the present embodiment, as in Embodiment 1, the deterioration of the image resolution during multi-viewpoint stereoscopic image display is dispersed in two directions, vertically and horizontally, so that the visibility of the discontinuities in the viewed image can be reduced compared to that in the conventional apparatus.

*Embodiment 3*

In Embodiments 1 and 2, a parallax barrier with a color filter or a polarization filter is used as an optical separating member for separating image light with respect to the horizontal direction, but the optical separating member in the present invention is not limited to this. Furthermore, also the arrangement of the pixels on the display device is not limited to the arrangements shown in FIG. 2 and FIG. 17. In the following, more general conditions for working the present invention are derived, and an embodiment of a more general form than Embodiments 1 and 2 is explained.

*Method for Separating Image Light*

In the present embodiment, a selective transmissivity of light is utilized to separate the image light. This selective transmissivity has the following features:

Condition 1: It is possible to selectively transmit only a light component of one state from light in which light components with n states are mixed.

Condition 2: This selective transmission can be performed for all light components with n states.

Here, the state of "having selective transmissivity for light components with n states" is defined as the state in which these two conditions are satisfied.

For example, in Embodiment 1, the light emerging from the display device is in a state in which the three color components R, G and B are mixed, but by selectively transmitting it with three types of transmission filters, namely the "R transmission filter," "G transmission filter" and "B transmission filter," independently for each of the RGB color light components, there is selective transmissivity for light components with three states.

Moreover in Embodiment 2, the first polarization state light P and second polarization state light S are mixed in the light emerging from the display device, and by transmitting the light independently through two types of transmission filters, namely the "P transmission filter" and the "S transmission filter," there is selective transmissivity for light components with two states.

By combining the Embodiment 1 and the Embodiment 2, it is possible to utilize six types of selective transmissivity. More specifically, there are the following combinations:

1) color component R and polarization state P
2) color component R and polarization state S
3) color component G and polarization state P
4) color component G and polarization state S
5) color component B and polarization state P
6) color component B and polarization state S

In this case, there is selective transmissivity for light components with six states.

*Pixel Arrangement Method*

The following is an explanation of a method for arranging pixels on the display device. First, the number of parallax images (number of viewpoints) that the stereoscopic image display apparatus according to the present embodiment can display is a multiple of the aforementioned n. Consequently the following condition is satisfied:

Condition 3: the number of parallax images (number of viewpoints) k is given by k = n × m (where n is the number of states of light that can be separated and m is a natural number).

As can be seen from FIG. 3 of Embodiment 1, the transmission filters of the parallax barrier 2 are of vertically oblong shape, and the position of the pixels in vertical direction does not contribute to determining the directionality of the light rays from the pixels. In other words, on which viewpoint the light emitted from which pixel converges depends on the horizontal position of that pixel, and is independent of the position in the vertical direction.

Consequently, it is not necessary that, in the pixel arrangement on the display device, the vertical positions of the pixels emitting the light components with the same states is the same, as shown in FIG. 2. However, in order to attain the effect of the present embodiment, it is necessary that the following condition is satisfied:

Condition 4: For pixel groups emitting light components with different states, the viewpoint number arrangement of the pixels in the horizontal direction is a repetition of a sequence of k viewpoints.

Condition 5: Among pixel groups emitting light components with different states, the pixel positions of the viewpoint number 1 are shifted by a predetermined amount in the horizontal direction, and this shift amount is a unique amount for the combination of pixel groups.

As long as the Conditions 4 and 5 are satisfied, it is not necessarily required that, in the pixel arrangement of the present embodiment, the same pixel arrangement pattern is repeated in practice. That is to say, it is possible to form image information including a plurality of parallax images on the display device by combining pixel arrangements with a plurality of different patterns.

However, repeating a pixel arrangement pattern within a given limited region across the entire image display surface is advantageous in consideration of the uniformity of the image as well as in consideration of the difficulty of the manufacturing process. In this case, regarding the pixel arrangement pattern within this limited region, the Condition 4 and the Condition 5 can be expressed in other words as follows:

Condition 6: For a pixel arrangement within a matrix of n pixels vertically and k pixels horizontally, the pixels for 1 to k viewpoints are arranged one by one such that there is no duplication in the vertical direction of pixels emitting light of the same state.

Condition 7: For a pixel arrangement within a matrix of n pixels vertically and k pixels horizontally, when the horizontal position (x coordinate) of a pixel emitting light of any state is increased by 1, also the viewpoint number increases by 1 (except for k, in which case the following viewpoint number is 1).

Condition 8: For a pixel arrangement within a matrix of n pixels vertically and k pixels horizontally, the shift amount of the viewpoint numbers between the pixel groups having the same horizontal position (x coordinate) emitting light components with different states is unique for each combination.

The following is a look at pixel arrangement patterns satisfying these Conditions 6 to 8 for Embodiment 2. First, in Embodiment 2, n=2 and k=8, so that the pixel arrangement pattern is within a region of a matrix of two pixels vertically and eight pixels horizontally.

For Condition 8, as was pointed out in Embodiment 2 already, it is preferable with regard to the difficulty of the manufacturing process of the parallax barrier 102 that the shift amount of the viewpoint numbers amount different pixel groups is set to 4. In this case, all patterns shown in FIG. 27 satisfy the Conditions 6 to 8.

In the pattern of FIG. 27(a), in which there is no switching of pixel lines, the P pixel group and the S pixel group are arranged separately in different horizontal rows. In the pattern of FIG. 27(b), in which there is an alternation at every pixel, the P pixel group and the S pixel group are arranged separately within different horizontal rows with an alternation at every pixel.

Similarly, in the pattern of FIG. 27(c), in which there is an alternation at every two pixels, the P pixel group and the S pixel group are arranged separately within different horizontal rows with an alternation at every two pixels. And in the pattern of FIG. 27(d), in which there is an alternation at every four pixels, the P pixel group and the S pixel group are arranged separately within different horizontal rows with an alternation at every four pixels.

Also in arrangements not shown in the figures, when the ratio between the number of P pixels and the number of S pixels in one horizontal row is defined as $\alpha : \beta$, then the numbers of pixels are set such that

$$\alpha + \beta = 8 \text{ (where } \alpha \text{ and } \beta \text{ are any natural number or zero)}$$

and if the Conditions 6 to 8 are satisfied, then a pixel pattern in accordance with the present embodiment is established.

*Variation of Parallax barrier*

The parallax barrier is made by combining light-blocking portions that block light and transmission filters that transmit light selectively. The conditions that should be satisfied by the parallax barrier are as follows.

Condition 9: The parallax barrier has n types of transmission filters having selective transmissivity for light components of mutually different states. The central position in the horizontal direction of each type of transmission filter is on a straight line connecting the horizontal position of a viewpoint and the central position in the horizontal direction of the pixel having the viewpoint number of that viewpoint and emitting the type of light transmitted by that filter.

Condition 10: The parallax barrier has n types of transmission filters having selective transmissivity for light of mutually different states. The intervals between the transmission filters of the various types are determined by the unique shift amount between the pixel groups given by Condition 5 or Condition 8, the interval between the display device and the parallax barrier, and the interval between the parallax barrier and the viewpoint plane.

Expressing Conditions 9 and 10 in a more general form using specific parameters, they become as follows:

When $H_d$ is the horizontal pitch of the pixels in the display device (image display surface), $H_e$ is the interval between the viewpoints on the viewpoint plane, L1 is the interval between the display device and the parallax barrier, and L0 is the interval from the parallax barrier to the viewpoint plane, then the following equation is satisfied:

$$(7) \qquad \frac{H_d}{H_e} = \frac{L_1}{L_0}$$

Moreover, when, for any combination i and j of the states of light, $H_{m(i-j)}$ is the interval between the selectively transmitting filters, $\Delta_{i-j}$ is the unique shift amount among the pixel groups emitting light i and the pixel groups emitting light j, L1 is the interval between the display device and the parallax barrier, and L0 is the interval from the parallax barrier to the viewpoint plane, then the following equation is satisfied:

$$(8) \qquad \frac{\Delta_{i-j}}{H_{m(i-j)}} = \frac{L_1}{L_0}$$

That the Equations (7) and (8) are true for all combinations of i and j is the condition that should be satisfied by the parallax barrier.

*Embodiment 4*

In Embodiments 1 to 3, it is presumed that slit-shaped filters of small horizontal width are used as the transmission filters of the parallax barrier, but as long as the directionality of the image information light is preserved, it is possible to enlarge the horizontal width of the filters to improve the light utilization efficiency. In order to realize this, it is advantageous to use a set of cylindrical lenses (lenticular lens) having the property to focus light only in the horizontal direction.

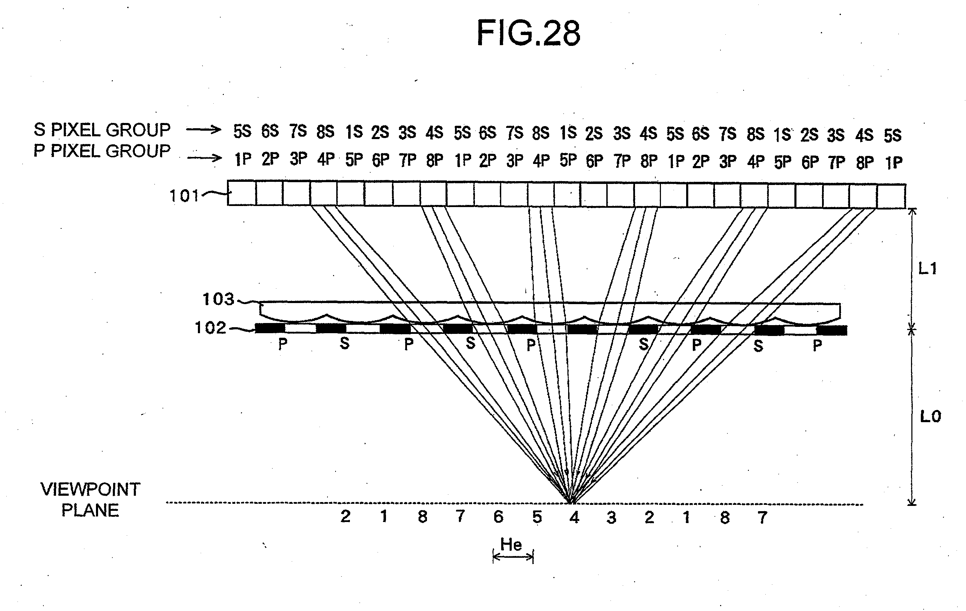

FIG. 28 is a top view of the case that such lenticular lenses are applied to the structure of Embodiment 2. For simplification, FIG. 28 shows only the trajectories of the light converging on the viewpoint 4, but in actuality, this structure is expanded over all viewpoints.

In the present embodiment, the central positions with respect to the horizontal direction of the transmission filters of the parallax barrier 102 are the same as in Embodiment 2, but the horizontal width of the transmission filters is larger than in Embodiment 2.

Reference numeral 103 in FIG. 28 denotes a lenticular lens. The lenticular lens 103 is disposed near the parallax barrier 102, and the transmission filters of the parallax barrier 102 and the elementary lenses of the lenticular lens 103 are arranged with one-to-one correspondence.

The lenticular lens 103 is designed and arranged such that those of the horizontal components of the principal rays through the elementary lenses that pass through the horizontal center of the pixels also pass through the viewpoint position corresponding to those pixels. Therefore, directionality can be created which is similar to that of the light generated by the filters (slits) in Embodiment 2

Moreover, in the present embodiment, in order to increase the convergence of the light on the viewpoints, the lenticular lens 103 is designed and arranged such that the horizontal centers of the pixels and the corresponding viewpoints are optically conjugated (however only with respect to the horizontal components). Consequently, the horizontal components of the image information light emerging from the corresponding pixels are converged by the elementary lenses onto the corresponding viewpoints (there is no focusing operation with regard to the vertical components). Due to the symmetry and periodicity of the lenticular lens, this characteristic is also given for the other viewpoints.

Due to this structure, it is possible to configure a multi-viewpoint stereoscopic image display apparatus, as in the other embodiments. And moreover, the light utilization efficiency of the present embodiment is improved over that of the other embodiments inasmuch as the horizontal width of the filters (slits) is enlarged, so that brighter stereoscopic image display becomes possible.

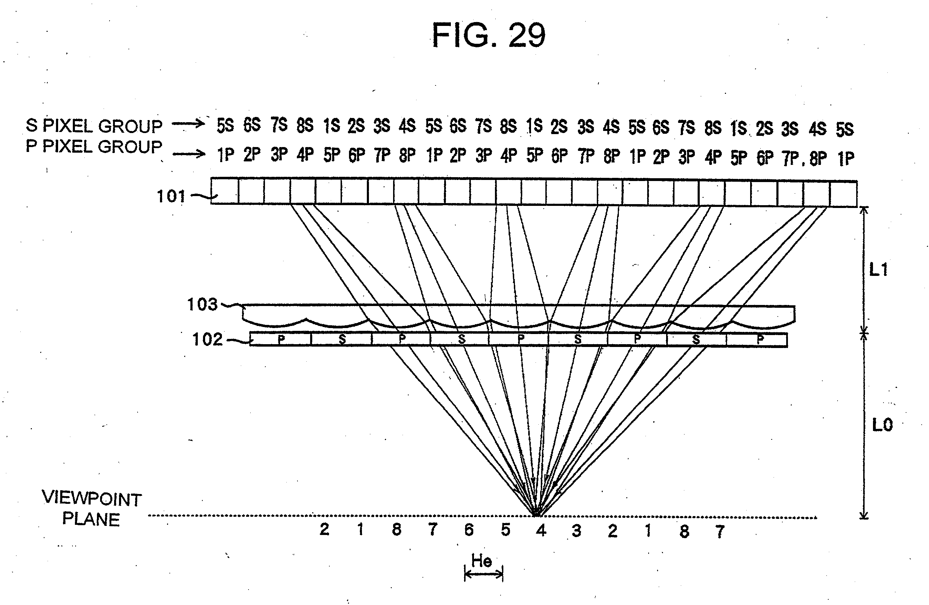

FIG. 29 is a top view of an example structure, in which this increase of the light utilization efficiency is even more striking. In this example structure, the horizontal width of the filters (slits) is enlarged as much as possible, and the light blocking portions are completely eliminated.

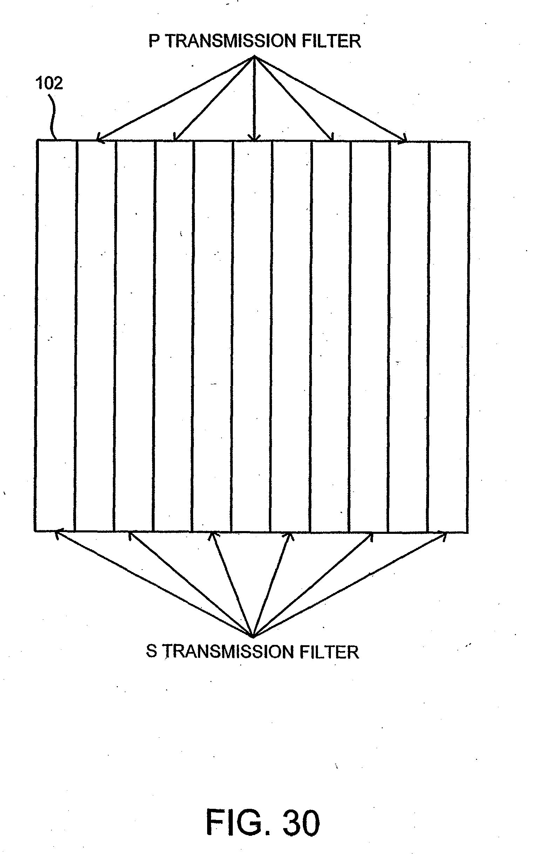

FIG. 30 shows a front view of the parallax barrier 102 for this case. Regions transmitting the first polarization state light P and regions transmitting the second polarization state light S are lined up in alternation in the horizontal direction.

In the present embodiment, even when using the parallax barrier 102 of this structure it is possible to generate such a directionality that the image information light converges at each of the viewpoints, due to the action of the lenticular lens 103.

It should be noted that this method of improving the light utilization efficiency by using the focusing ability of lenses can be applied to all structures satisfying the general conditions given in Embodiment 3.

*Embodiment 5*

As described in Embodiment 3, in a case where a stereoscopic image display apparatus for k parallax images (viewpoints) is configured such that in a state having selective transmissivity for light components with n states

$k = n \times m$ (where n is the number of states of light that can be separated and m is a natural number), then the pixel arrangement on the display device is attained by combining a plurality of pixel arrangement patterns in which a matrix of n pixels vertically and k pixels horizontally is taken as one unit.

Consequently, when the number of parallax images k is large, the aspect ratio n/k of the matrix tends to become small. This is because n is a relatively small number of 2, 3 or 6, as explained in the above embodiments.

For example, when the number of parallax images is k = 50 and n=2 (when using the selective transmissivity due to the polarization state as described in Embodiment 2), then n/k = 1/25, and it becomes a matrix which is oblong in the horizontal direction.

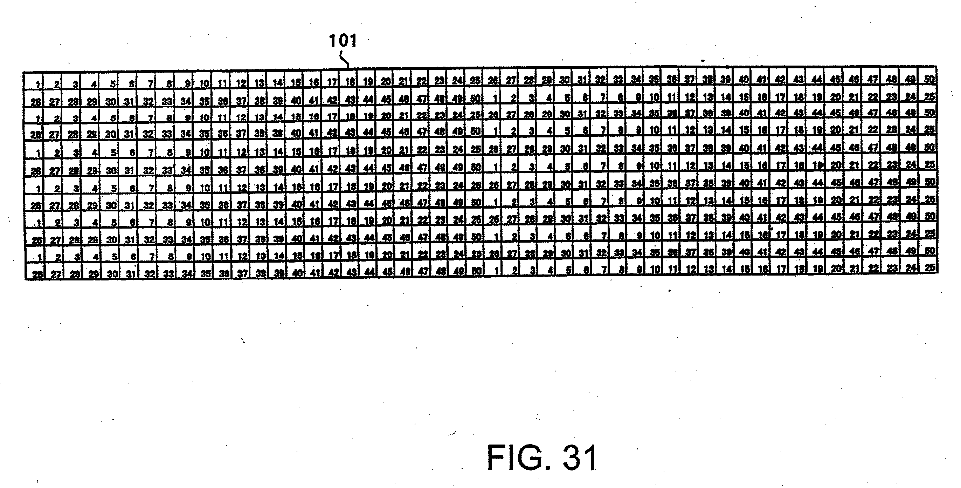

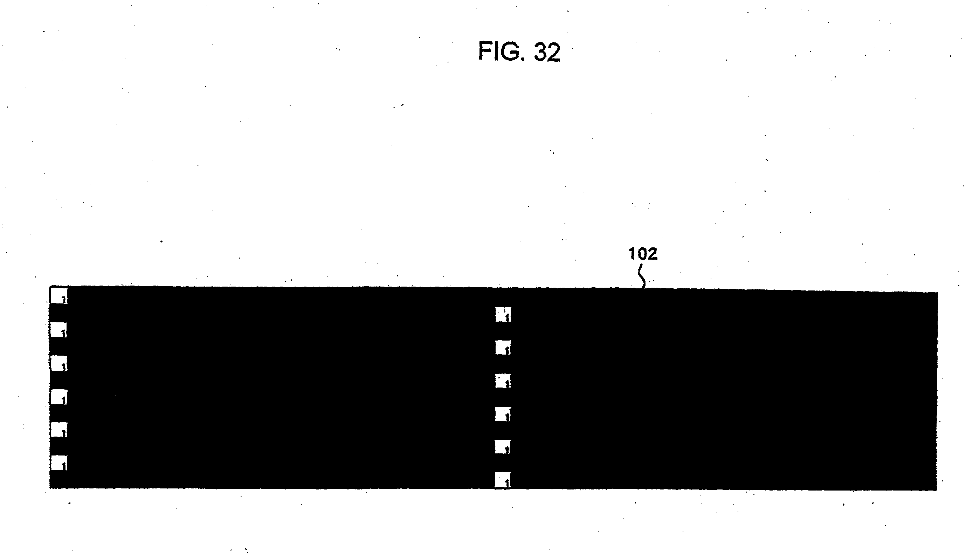

FIGS. 31 and 32 illustrate the problems that occur when the pixels are disposed in a horizontally oblong matrix arrangement.

FIG. 31 shows the pixel arrangement in the display device 101 for the case that k = 50 and n = 2. If the image is viewed from the viewpoint 1, using a stereoscopic image display apparatus configured with this pixel arrangement, then the viewer sees an image as shown in FIG. 32. Similar to the image viewed with the conventional multi-viewpoint stereoscopic image display apparatus shown in FIG. 15, the discontinuities of this image in horizontal direction are conspicuous, and it becomes difficult to infer the information of the original image. That is to say, if the number of viewpoints k is large, the degree to which the resolution deteriorates will be unbalanced between the vertical direction and the horizontal direction. In order to solve this problem, it is necessary to ensure that the aspect ratio n/k of the matrix does not become small.

In the present embodiment, this problem is solved by introducing an optical element array 104 controlling the directionality in the vertical direction (optical control member: referred to in the following as "vertical directionality control array").

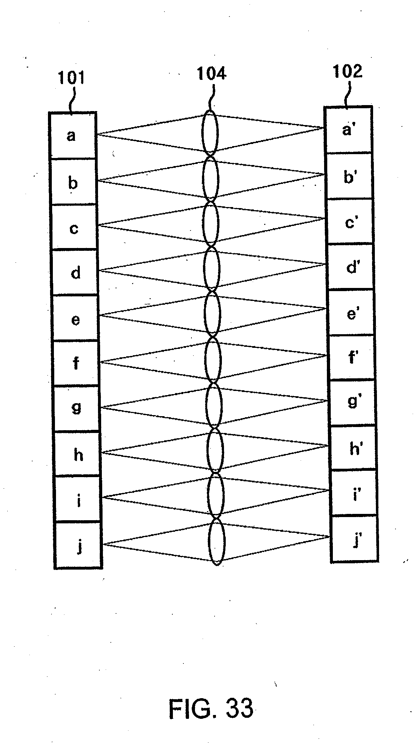

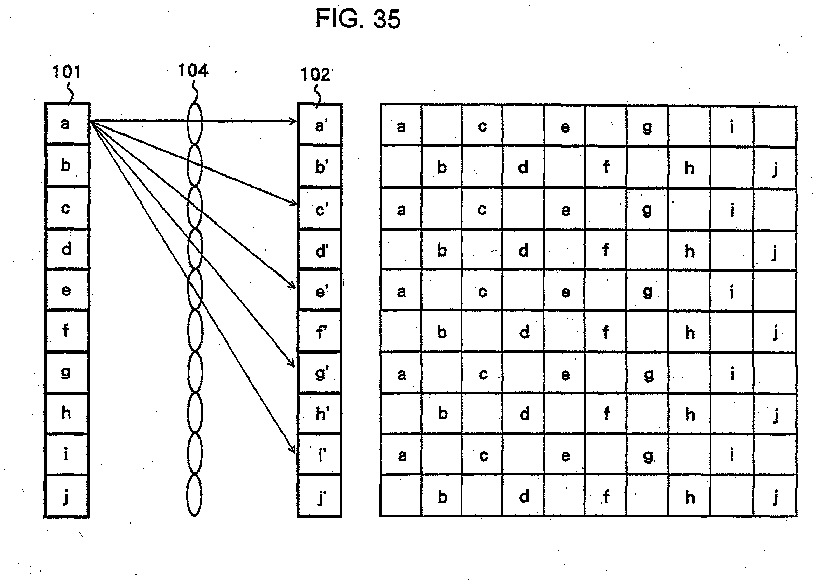

FIGS. 33 and 35 are lateral views illustrating the function of the vertical directionality control array 104. The vertical directionality control array 104 has the function of directing light emerging from each pixel at a certain height on the display device 101 to a predetermined height on the parallax barrier 102 (i.e. a predetermined horizontal row of the transmission filters in the parallax barrier 102).

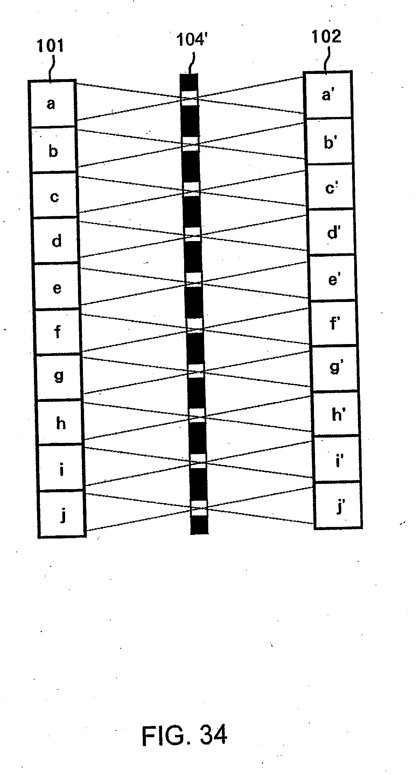

For example, the vertical directionality control array 104 shown in FIG. 33 is made of cylindrical lenses whose generatrix is horizontal are arranged in repetition in the vertical direction with the same pitch as the pixel pitch in height direction. Alternatively, it is also possible to use a vertical directionality control array 104' as shown in FIG. 34. The vertical directionality control array 104' (in the following explanations the reference numeral 104 is used) is a mask on which slit apertures, which are oblong in the horizontal direction but have a very small vertical height, are arranged in repetition in the vertical direction with the same pitch as the pitch in height direction of the pixels.

In this case, the interval between the display device 101 and the vertical directionality control array 104 is the same as the interval between the parallax barrier 102 and the vertical directionality control array 104. In particular in case of the structure shown in FIG. 33, due to the cylindrical lenses, the pixels of the display device 101 are imaged at the same size with regard to the vertical direction onto the parallax barrier 102. It should be noted that in the following explanations, a set of pixels at the same position in the vertical direction (that is, a horizontal line) is referred to as "pixel line," and each pixel line is denoted by a different letter. Moreover, the regions at which a horizontal row of transmission filters is formed in the horizontal barrier 102 at a position in the vertical direction corresponding to the pixel lines are referred to as "filter lines", and those filter lines are denoted by adding an apostrophe (') to the letter of the corresponding pixel line.

In FIGS. 33 and 34, the light emerging from the pixel line a on the display device 101 is directed to the filter line a' on the parallax barrier 102, the light emerging from the pixel line b on the display device 101 is directed to the filter line b' on the parallax barrier 102, and so on. Thus, the light from any pixel line on the display device 101 is directed to the filter line of the parallax barrier 102 at the same height as that pixel line.

Thus, using the vertical directionality control array 104, an unequivocal correspondence can be established between the vertical positions of the pixels on the display device 101 and the vertical positions where the light rays emerging from those pixels are incident on the parallax barrier 102. However, the correspondence between the vertical position of the pixel on the display device 101 and the horizontal incidence position on the parallax barrier 102 is not actually a one-to-one correspondence, but a one-to-many correspondence. This is illustrated by FIG. 35.

In FIG. 35, the light emitted from the pixel line a is divergent in the vertical direction, so that it arrives also at locations other than the filter line a' of the same vertical position on the parallax barrier 102. In this case, due to the action of the vertical directionality control array 104, it arrives at regions on the parallax barrier 102 corresponding to every other filter line in the vertical direction, namely the filter lines a', c', e', g', etc. The same is true not only for the pixel line a, but for all pixel lines.

The table shown to the right of the parallax barrier 102 in FIG. 35 illustrates from which pixel the light rays arrive at the filter lines a' to j' of the parallax barrier 102. For example, the uppermost row of the table denotes the letters of the pixel lines emitting the light ray incident on the filter line a' of the parallax barrier 102.

Thus, the light rays incident on the filter lines a', c', e', g' and i' of the parallax barrier 102 are the light rays from the pixel lines a, c, e, g and i, whereas the light rays incident on the filter lines b', d', f', h' and j' are the light rays from the pixel lines b, d, f, h and j.

That is to say, the vertical directionality control array 104 directs the light rays from the odd-numbered pixel lines (counting from the top) on the display device 101 to the odd-numbered filter lines on the parallax barrier 102, and directs the light rays from the even-numbered pixel lines (counting from the top) on the display device 101 to the even-numbered filter lines on the parallax barrier 102. In other words, the vertical directionality control array 104 separates the light rays coming from a plurality of pixel lines that are continuous (adjacent to one another) in the vertical direction and projects these light rays onto two different filter lines on the parallax barrier 102.

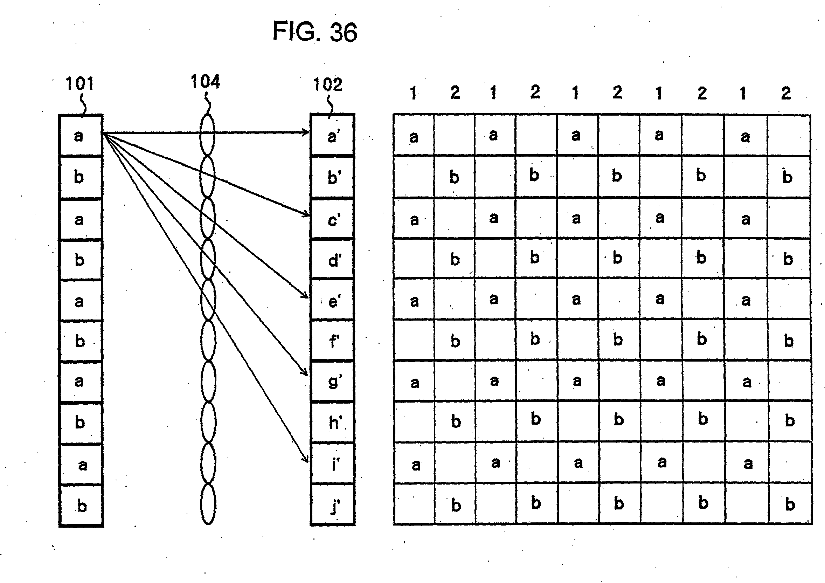

In this case, when the pixel lines c, e, g and i are regarded as equivalent to the pixel line a, and the pixel lines d, f, h and j are regarded as equivalent to the pixel line b, then a relation as shown in FIG. 36 is established. That is to say, the light rays from the pixel lines a are separated and projected onto the odd-numbered filter lines (counting from the top) on the parallax barrier 102, and the light rays from the pixel lines b are separated and projected onto the even-numbered filter lines (counting from the top) on the parallax barrier 102.

Using this action of the vertical directionality control array 104, it is possible to make the aspect ratio n/k of the matrix of the above-described pixel arrangement larger.

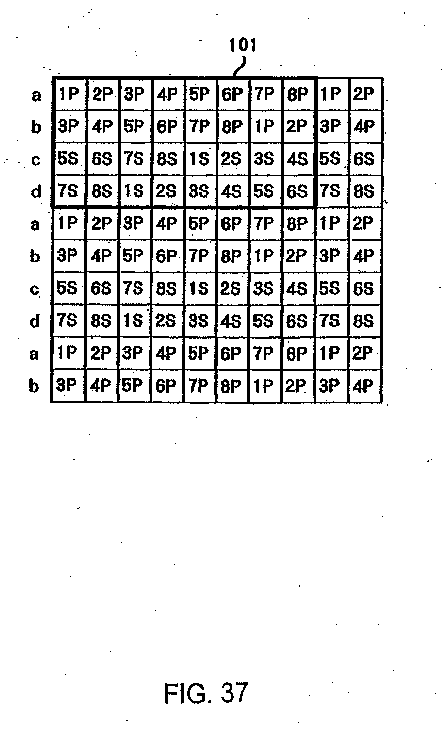

This is explained with reference to FIGS. 37 to 41. Here, as in Embodiment 2, an image separation is performed using differences in the polarization state of the light. However, a matrix arrangement pattern of two pixels vertically and k pixels horizontally (where k is the number of viewpoints) is used in Embodiment 2 as the pixel arrangement pattern, but in the present embodiment, a matrix arrangement pattern of four pixels vertically and k pixels horizontally is employed.

FIG. 37 is a front view showing the pixel arrangement pattern on the display device 101. As in FIG. 17, in the expressions assigned to the pixels, the numerical portion represents the number of the parallax image information (that is, from which viewpoint the image information can be viewed), and P and S represent the polarization state.

In the present embodiment, stereoscopic display with eight viewpoints is performed, so that pieces of the parallax image information from 1 to 8 are arranged cyclically in the horizontal direction in each of the pixel lines, and the pixel arrangement pattern in the region enclosed by the bold frame in FIG. 37 is arranged repeatedly across the entire display device 101.

These pixel arrangements are in accordance with the general conditions given in Embodiment 3, but the present embodiment differs from the foregoing embodiments in that two lines of pixels emitting light P alternate in the vertical direction with two lines of pixels emitting light S.

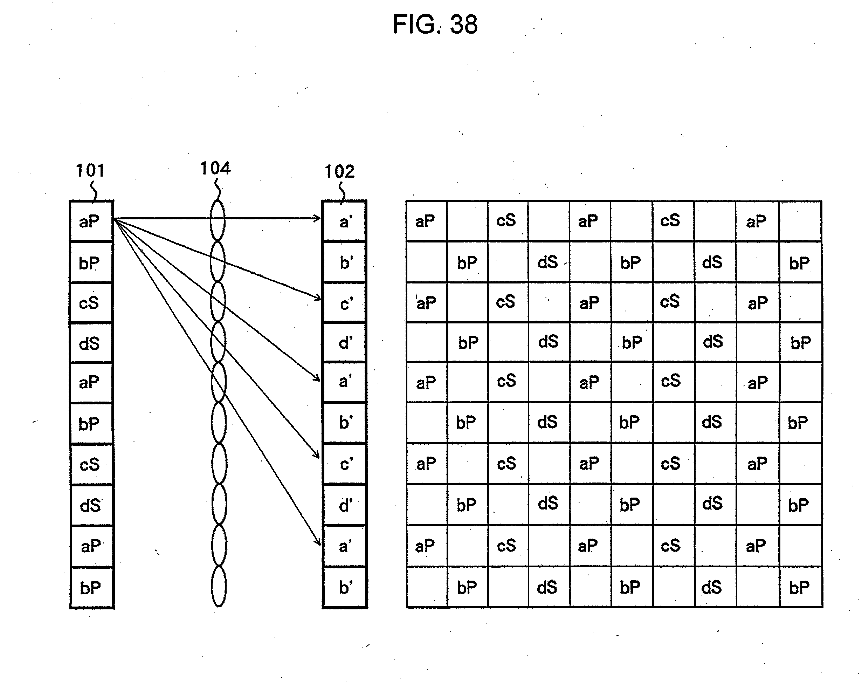

FIG. 38 shows a lateral view of the present embodiment and a table of the separation/projection pattern of the light from the display device 101 to the parallax barrier 102.

The light rays from both the pixel lines a and c are incident in superposition on the filter lines a' and c'. First polarization state light P emerges from the pixel line a, whereas second polarization state light S emerges from the pixel line c.

On the other hand, the light rays from both the pixel lines b and d are incident in superposition on the filter lines b' and d'. First polarization state light P emerges from the pixel line b, whereas second polarization state light S emerges from the pixel line d.

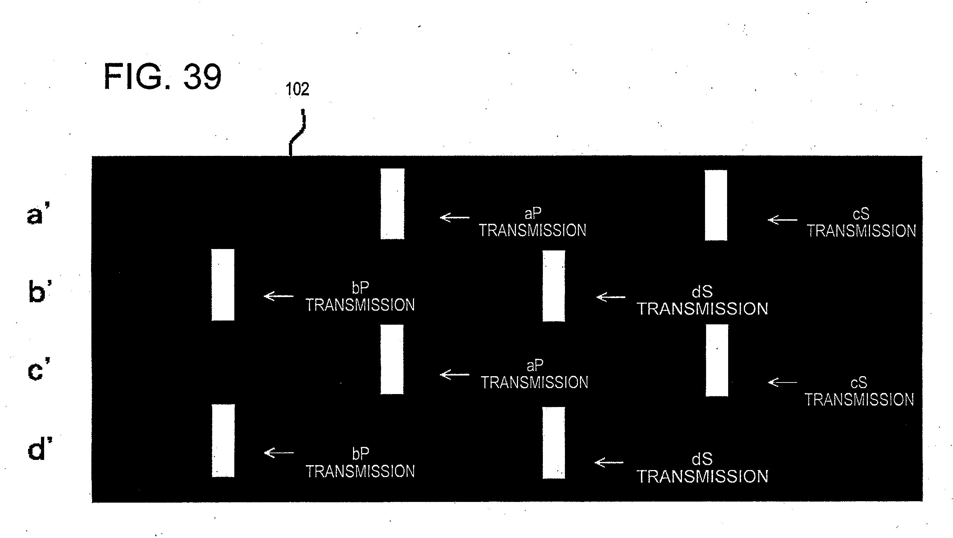

FIG. 39 is a front view showing the structure of the parallax barrier 102 of the present embodiment, corresponding to the pixel arrangement pattern in FIG. 37. The P transmission filters arranged at the filter lines a' and c' are used to transmit the light from the pixel line a (first polarization state light P), and the S transmission filters at the filter lines a' and c' are used to transmit the light from the pixel line c (second polarization state light S).

On the other hand, the P transmission filters arranged at the filter lines b' and d' of the parallax barrier 102 are used to transmit the light from the pixel line b (light P of the first polarization state), and the S transmission filters at the filter lines b' and d' are used to transmit the light from the pixel line d (light S of the second polarization state).

Here, in the parallax barrier 102, P transmission filters and S transmission filters belonging to horizontal rows of transmission filters of different vertical positions and having different characteristics are arranged such that their positions do not overlap in the vertical direction (the horizontal positions are shifted against one another).

It should be noted that in the present embodiment, a wave plate patterned as shown in FIG. 26 may be used to form an arrangement pattern of pixels emitting light components of different polarization states and a filter arrangement pattern of the parallax barrier.

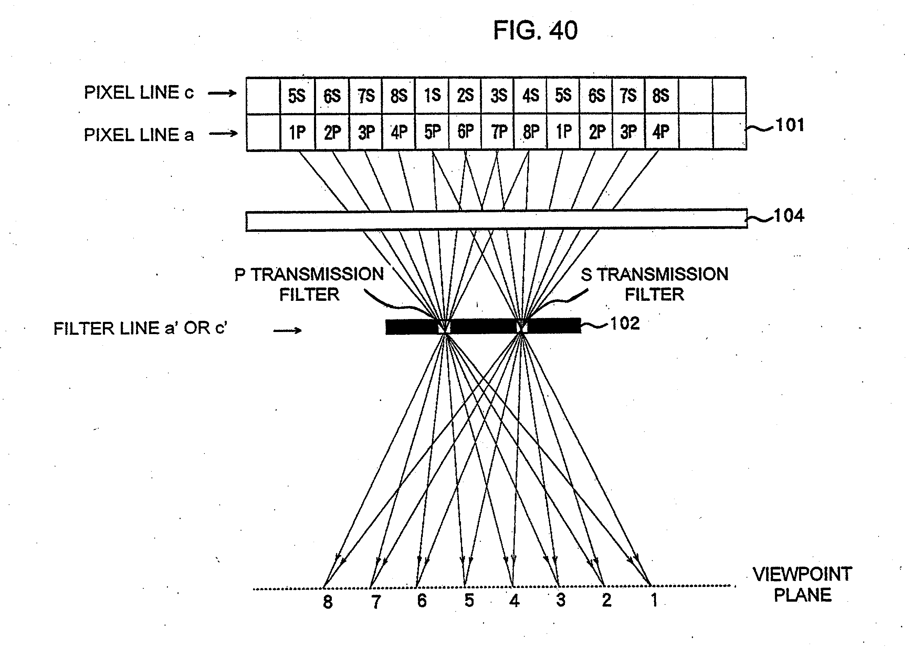

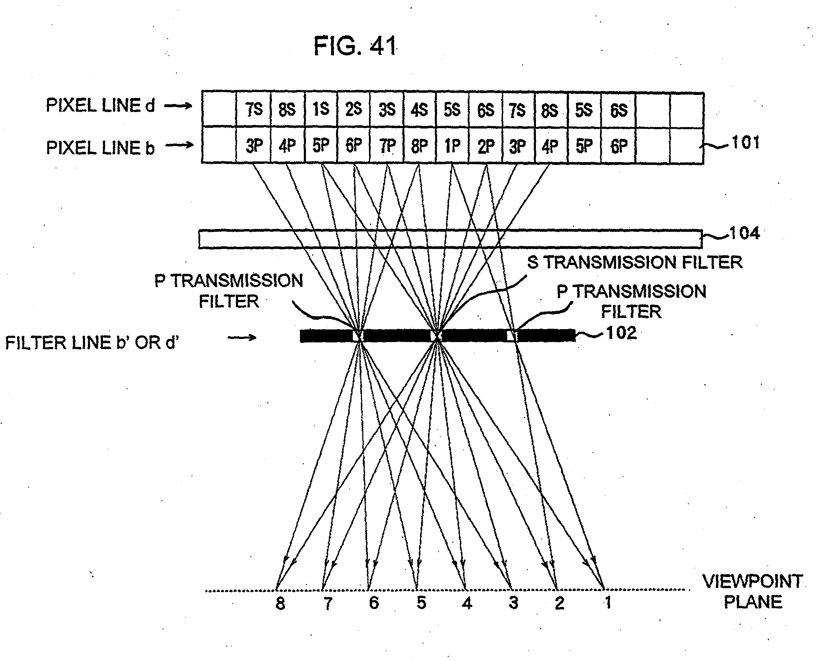

FIG. 40 is a top view showing how the horizontal components of the light from the pixel lines a and c arrive at each of the viewpoints, and FIG. 41 is a top view showing how the horizontal components of the light from the pixel lines b and d arrive at each of the viewpoints.

From these figures, it can be seen that, as in the other embodiments, the horizontal components of the light from each of the pixels are guided correctly to the corresponding viewpoints.

It should be noted that the relation shown in FIG. 40 and the relation shown in FIG. 41 are established independently in alternation for each pixel line. That is to say, when the pixel arrangement pattern of FIG. 37 is combined with the arrangement pattern of the transmission filters of the parallax barrier 102 in FIG. 39, then it becomes possible to direct the light rays from four different pixel lines independently to the desired direction in the horizontal direction.

Thus, using a vertical directionality control array 104 as shown in FIGS. 33 and 35, a pixel arrangement as shown in FIG. 37, and a parallax barrier 102 as shown in FIG. 39, the aspect ratio of the matrix of the above-mentioned pixel arrangement becomes:

$$n/k = 4/8 = 1/2$$

Thus, compared to the aspect ratio $n/k = 2/8 = 1/4$ of the matrix for the case that the vertical directionality control array 104 is not used (for example in the case of Embodiment 2), an aspect ratio which is twice as high can be realized, and it is possible to improve the problem that the extent of the deterioration of the resolution when the number of viewpoints k becomes large is unbalanced in the vertical direction and the horizontal direction.

A similar improvement can also be realized for parallax barriers that separate light differently than by polarization state. The following explains the case that the parallax barrier performing color separation by the three color light components (wavelength regions) of R, G and B, which was explained in Embodiment 1, is applied to the present embodiment.

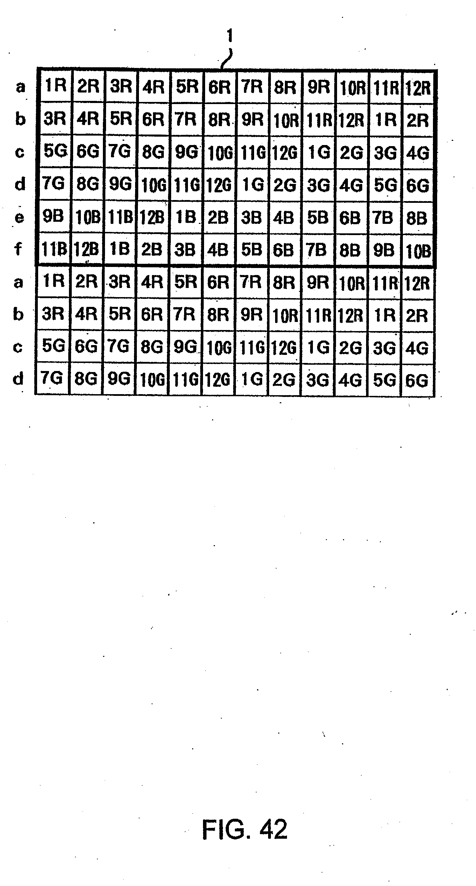

FIG. 42 is a front view showing an arrangement pattern of pixels on the display device 1. As in FIG. 2, the numerical portion of the expressions assigned to the pixels represents the number of the parallax image information (from which viewpoint the image information is viewed), and the letters R, G and B indicate the color component. In the present embodiment, stereoscopic display with twelve viewpoints is performed, so that pieces of the parallax image information from 1 to 12 are arranged cyclically in the horizontal direction in each of the pixel lines, and the pixel arrangement pattern in the region enclosed by the bold frame in FIG. 42 is arranged repeatedly across the entire display device 1.

This pixel arrangement is in accordance with the general conditions given in Embodiment 3, but the present embodiment differs from the foregoing embodiments in that two pixel lines of the respective color components R, G and B are arranged in repetition in the vertical direction.

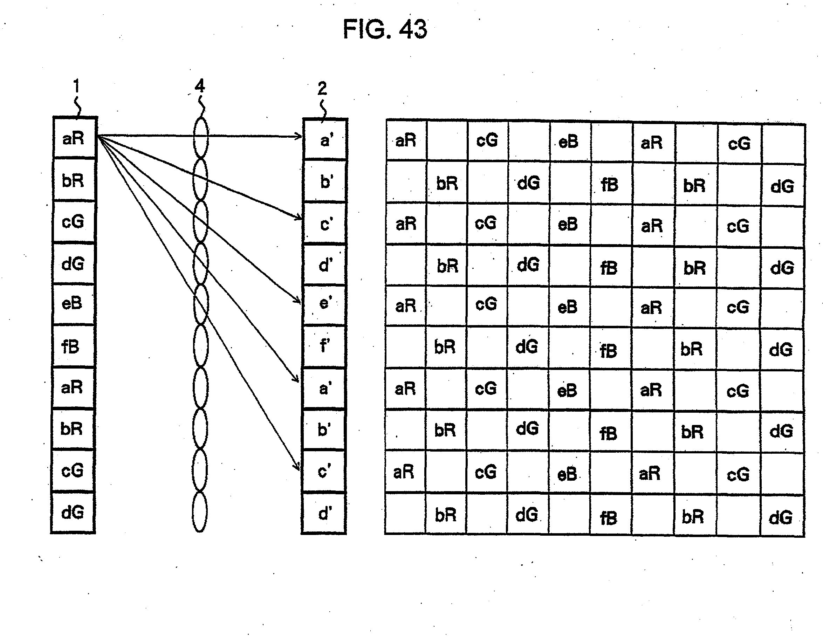

FIG. 43 shows a lateral view of the present embodiment and a table of the separation/projection pattern of the light from the display device 1 to the parallax barrier 2.

The light rays from the pixel lines a, c and e are incident in superposition on the filter lines a', c' and e' of the parallax barrier 2. The color of the light rays from the pixel line a is R, the color of the light from the pixel line c is G, and the color of the light from the pixel line e is B.

On the other hand, the light rays from the pixel lines b, d and f are incident in superposition on the filter lines b', d' and f' of the parallax barrier 2. The color of the light from the pixel line b is R, the color of the light from the pixel line d is G, and the color of the light from the pixel line f is B.

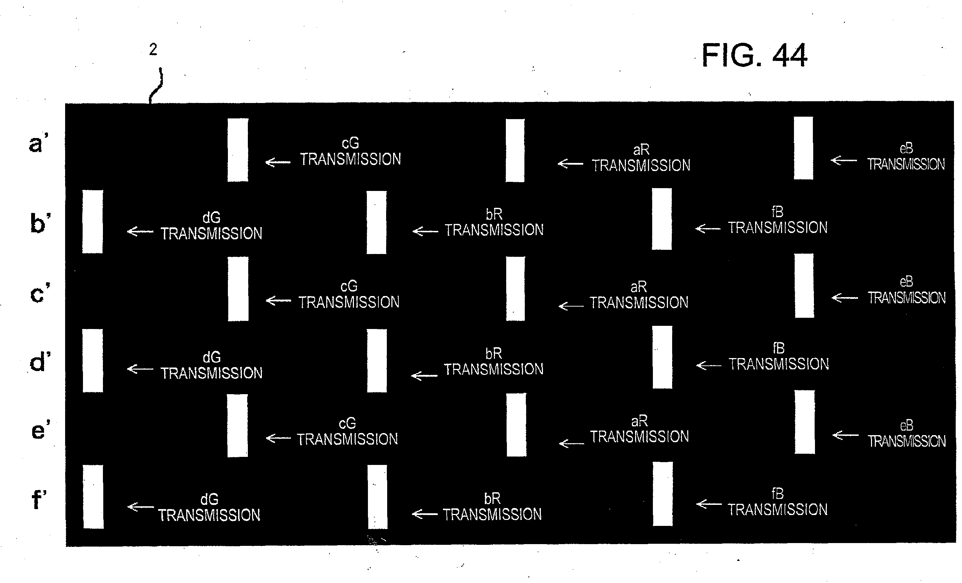

FIG. 44 is a front view showing the structure of the parallax barrier 2 of the present embodiment, corresponding to the pixel arrangement pattern in FIG. 42.

At the filter lines a', c' and e', the R transmission filters are used to transmit the light from the pixel line a, the G transmission filters are used to transmit the light from the pixel line c, and the B transmission filters are used to transmit the light from the pixel line e.

On the other hand, at the filter lines b', d' and f', the R transmission filters arranged are used to transmit the light from the pixel line b, the G transmission filters are used to transmit the light from the pixel line d, and the B transmission filters are used to transmit the light from the pixel line f.

Here, in the parallax barrier 2, R, G and B transmission filters belonging to horizontal rows of transmission filters of different vertical positions and having different characteristics are arranged such that their positions do not overlap in the vertical direction (the horizontal positions are shifted against one another).

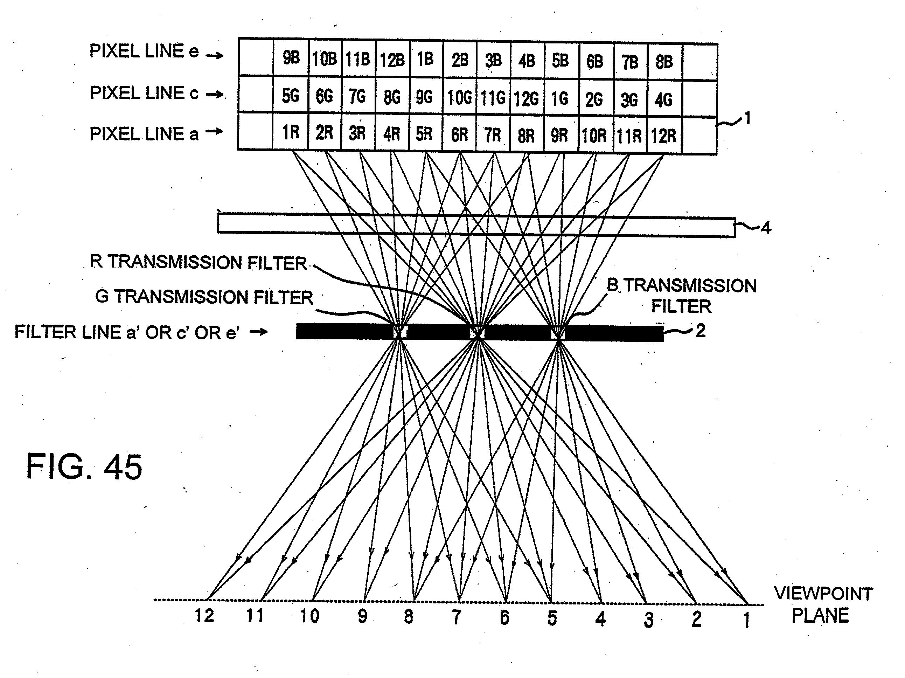

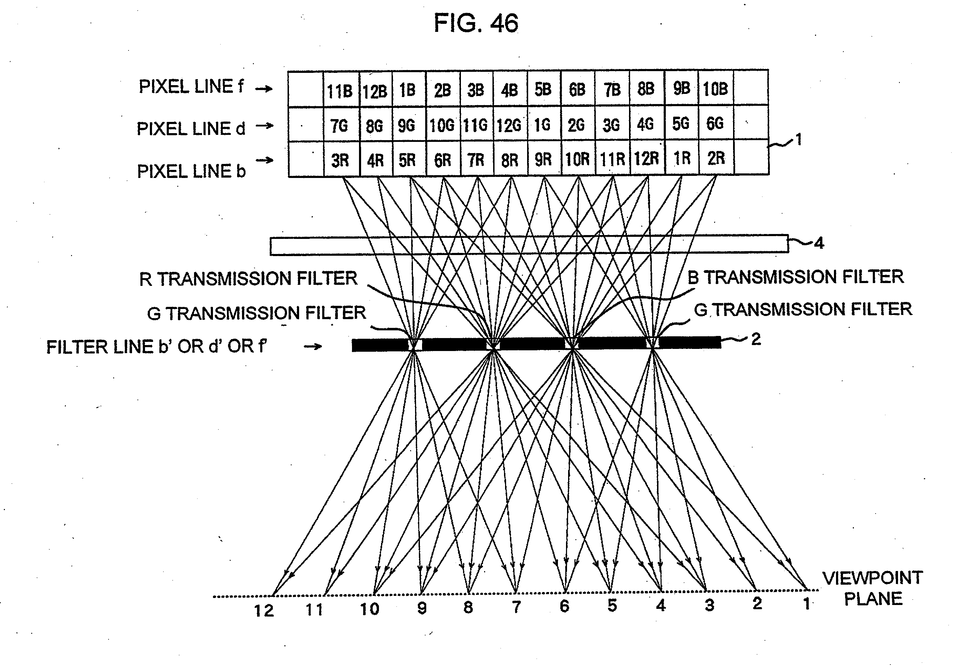

FIG. 45 is a top view showing how the horizontal components of the light from the pixel lines a, c and e arrive at each of the viewpoints. FIG. 46 is a top view showing how the horizontal components of the light from the pixel lines b, d and f arrive at each of the viewpoints. From these figures, it can be seen that, as in the other embodiments, the horizontal components of the light from the pixels are guided correctly to the corresponding viewpoints.

It should be noted that the relation shown in FIG. 45 and the relation shown in FIG. 46 are established independently in alternation for each pixel line. That is to say, it is evident that when the pixel arrangement pattern of FIG. 42 is combined with the arrangement pattern of the transmission filters of the parallax barrier 2 in FIG. 44, then it becomes possible to direct the light rays from six different pixel lines independently to the desired direction in the horizontal direction.

Thus, using a vertical directionality control array 4 as shown in FIG. 43, a pixel arrangement as shown in FIG. 42, and a parallax barrier 2 as shown in FIG. 44, the aspect ratio n/k of the matrix of the above-mentioned pixel arrangement becomes n/k = 6/12 = 1/2. Thus, compared to the aspect ratio n/k = 3/12 = 1/4 of the matrix for the case that the vertical directionality control array 4 is not used (for example in the case of Embodiment 1), an aspect ratio which is twice as high can be realized, and it is possible to improve the problem that the extent of the deterioration of the resolution when the number of viewpoints k becomes large is unbalanced in the vertical direction and the horizontal direction.

The following should become clear from the preceding two embodiments.

In Embodiments 1 to 3, when a parallax barrier is used that has selective transmissivity for light components with n states, then a stereoscopic image display apparatus can be configured using a pixel arrangement pattern constituted by a matrix of n pixels vertically and k pixels horizontally (where k is the number of viewpoints, and $k = m \times n$ (with k, m and n being natural numbers)), but in the present embodiment, by using a vertical directionality control array having a vertical repeating period which is the same as the pixel height, it is possible to configure a stereoscopic image display apparatus using a pixel arrangement pattern made of a matrix of 2n pixels vertically and k pixels horizontally.

Needless to say, also in a structure as in the present embodiment, it is possible to improve the light utilization efficiency by arranging a lenticular lens or the like as shown in Embodiment 4 (FIGS. 28 and 29) near the parallax barrier.

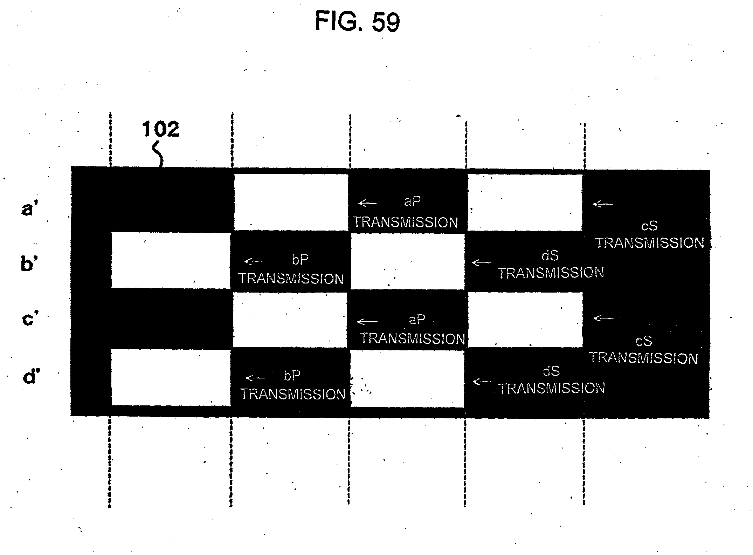

FIG. 59 is a front view showing the arrangement pattern of the transmission filters on the parallax barrier 102 for the case that a lenticular lens 103 is arranged near the parallax barrier 102 in the embodiment shown in FIG. 28.

The dotted lines in FIG. 59 indicate the borders of the elementary lenses of the lenticular lens 103. The horizontal width of the transmission filters is expanded to the width of the elementary lenses of the lenticular lens 103. Thus, the image perceived by the viewer becomes brighter than in the case that no lenticular lens is used.

It should be noted that also in this case, P transmission filters and S transmission filters belonging to horizontal rows of transmission filters of different vertical positions and having different characteristics are arranged such that their positions do not overlap in the vertical direction (the horizontal positions are shifted against one another) on the parallax barrier 102.

*Embodiment 6*

In Embodiment 5, a stereoscopic image display apparatus was configured with a pixel arrangement pattern made of a matrix of 2n pixels vertically and k pixels horizontally, using a vertical directionality control array having a vertical repeating period which is the same as the pixel height. In the present embodiment, the vertical repeating period of the vertical directionality control array is changed to a different value. It should be noted that in the present embodiment, an example is shown in which different polarization states are used for image separation, like in Embodiment 2, but the image separating method is not limited to this, and it is also possible to separate by color components, like in Embodiment 1.

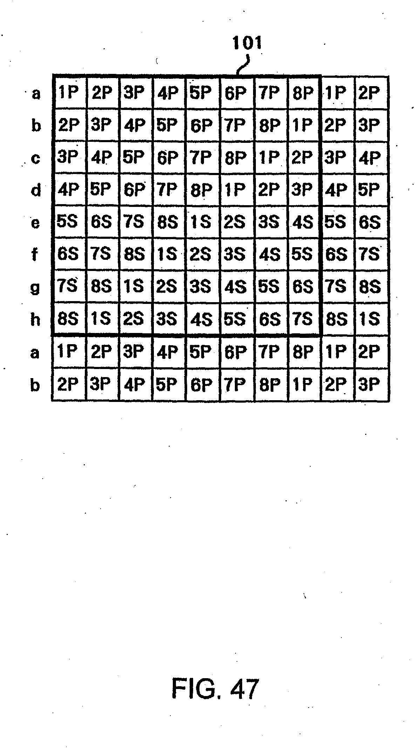

FIG. 47 is a front view showing an arrangement pattern of pixels on the display device 101. As in FIG. 17, in the expression assigned to each pixel, the numerals represent the number of the parallax image information (that is, from which viewpoint the image information can be viewed), and P and S represent the polarization state. In the present embodiment, stereoscopic display with eight viewpoints is performed, so that the pieces of parallax image information from 1 to 8 is arranged cyclically in the horizontal direction in each of the pixel lines, and the pixel arrangement pattern in the region enclosed by the bold frame in FIG. 47 is arranged repeatedly across the entire display device 101.

But different to Embodiment 5, in the present embodiment, the pixel arrangement pattern is made of a matrix of eight pixels vertically and eight pixels horizontally. Moreover, in the present embodiment, four pixel lines emitting the first polarization state light P and four pixel lines emitting the second polarization state light S are arranged in repetition in the vertical direction.

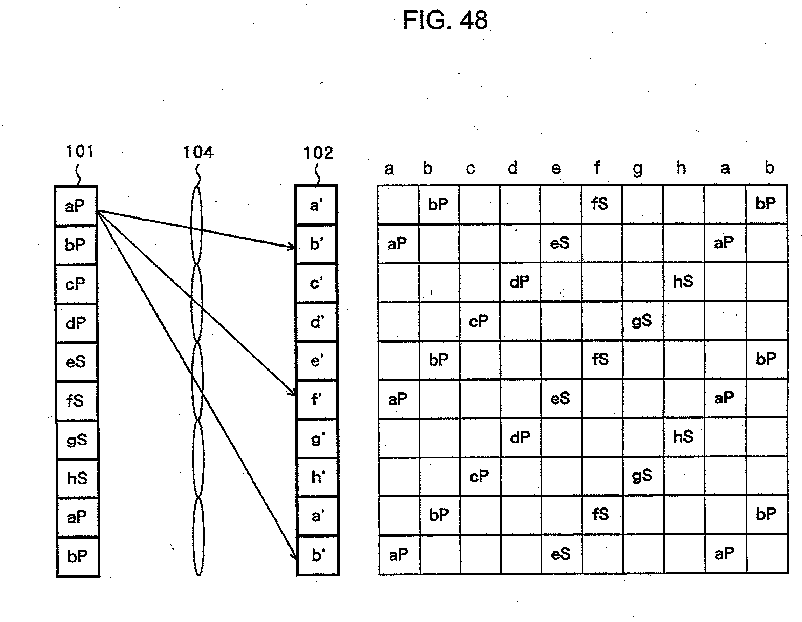

FIG. 48 shows a lateral view of the present embodiment and a table of the separation/projection pattern of the light from the display device 101 to the parallax barrier 102. In the present embodiment, the vertical repeating period of the vertical directionality control array 104 is twice the pixel height, so that the separation/projection pattern is different from that in Embodiment 5.

The light rays from the pixel lines a and e of the display device 101 are incident in superposition on the filter lines b' and f' of the parallax barrier 102. The light from the pixel line a is first polarization state light P, whereas the light from the pixel line e is second polarization state light S.

Similarly, the light rays from the pixel lines b and f are incident in superposition on the filter lines a' and e'. The light from the pixel line b is first polarization state light P, whereas the light from the pixel line f is second polarization state light S.

The light rays from the pixel lines c and g are incident in superposition on the filter lines d' and h'. The light from the pixel line c is first polarization state light P, whereas the light from the pixel line g is second polarization state light S.

Moreover, the light rays from the pixel lines d and h is incident in superposition on the filter lines c' and g'. The light from the pixel line d is first polarization state light P, whereas the light from the pixel line h is second polarization state light S.

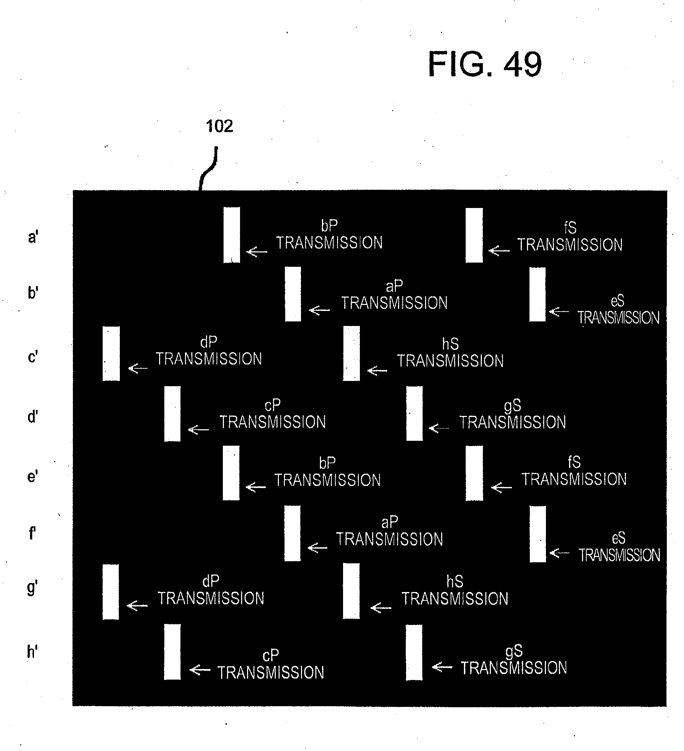

FIG. 49 is a front view showing the structure of the parallax barrier 102 of the present embodiment, corresponding to the pixel arrangement pattern in FIG. 47.

At the filter lines a' and e', the P transmission filters arranged are used to transmit the light from the pixel line b, and the S transmission filters are used to transmit the light from the pixel line f. At the filter lines b' and f', the P transmission filters arranged are used to transmit the light from the pixel line a, and the S transmission filters are used to transmit the light from the pixel line e.

At the filter lines c' and g', the P transmission filters arranged are used to transmit the light from the pixel line d, and the S transmission filters are used to transmit the light from the pixel line h.

At the filter lines d' and h', the P transmission filters arranged are used to transmit the light from the pixel line c, and the S transmission filters are used to transmit the light from the pixel line g.

Here, in the parallax barrier 102, P transmission filters and S transmission filters belonging to horizontal rows of transmission filters of different vertical positions and having different characteristics are arranged such that their positions do not overlap in the vertical direction (the horizontal positions are shifted against one another).

With the structure shown in FIGS. 47 to 49, as in the other embodiments, the horizontal components of the light from the pixels are guided correctly to the corresponding viewpoints.

What should be noted here is that the separation of the horizontal components of the light from the pixel lines is established independently for each and every one of the pixel lines. That is to say, when the pixel arrangement pattern shown in FIG. 47 is combined with the arrangement pattern of the transmission filters of the parallax barrier 102 in FIG. 49, then it becomes possible to direct the light rays from eight different pixel lines independently to the desired direction in the horizontal direction.

Thus, using a vertical directionality control array 104 as shown in FIG. 48, a pixel arrangement as shown in FIG. 47, and a parallax barrier 102 as shown in FIG. 49, the aspect ratio n/k of the matrix of the above-described pixel arrangement becomes:

$$n/k = 8/8 = 1$$

and compared to the aspect ratio n/k = 2/8 = 1/4 of the matrix for the case that the vertical directionality control array 104 is not used (for example in the case of Embodiment 2), an aspect ratio which is four times as high can be realized. Therefore, it is possible to improve the problem that the extent of the deterioration of the resolution when the number of viewpoints k becomes large is unbalanced in the vertical direction and the horizontal direction.

It should be noted that a similar improvement can be realized also in the case that another optical separating method not utilizing the polarization state is used. In general, the following should have become clear:

In Embodiments 1 to 3, when a parallax barrier is used that has selective transmissivity for light components with n states, then a stereoscopic image display apparatus can be configured using a pixel arrangement pattern constituted by a matrix of n pixels vertically and k pixels horizontally (where k is the number of viewpoints, and k = m × n (with k, m and n being natural numbers)), but in the present embodiment, by using a vertical directionality control array having a vertical repeating period which is twice the pixel height, it is possible to configure a stereoscopic image display apparatus using a pixel arrangement pattern made of a matrix of 4xn pixels vertically and k pixels horizontally.

The following is an explanation of an embodiment in which the vertical repeating period of the vertical directionality control array 104 is set to three times the pixel height.

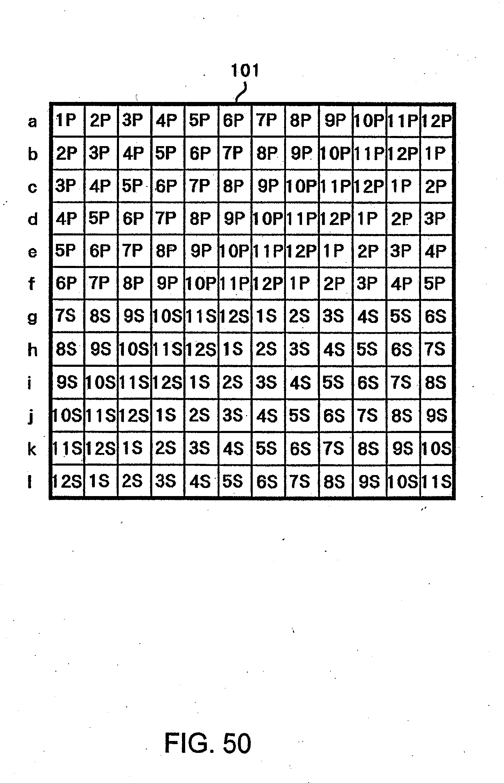

FIG. 50 is a front view showing the pixel arrangement pattern on the display device 101. In the present embodiment, stereoscopic display with twelve viewpoints is performed, so that pieces of the parallax image information from 1 to 12 is arranged cyclically in the horizontal direction in each of the pixel lines, and the pixel arrangement pattern in the region enclosed by the bold frame in FIG. 50 is arranged repeatedly across the entire display device 101. This pixel arrangement pattern is made of a matrix of twelve pixels vertically and twelve pixels horizontally. Moreover, six pixel lines emitting the first polarization state light P and six pixel lines emitting the second polarization state light S are arranged in repetition in the vertical direction.

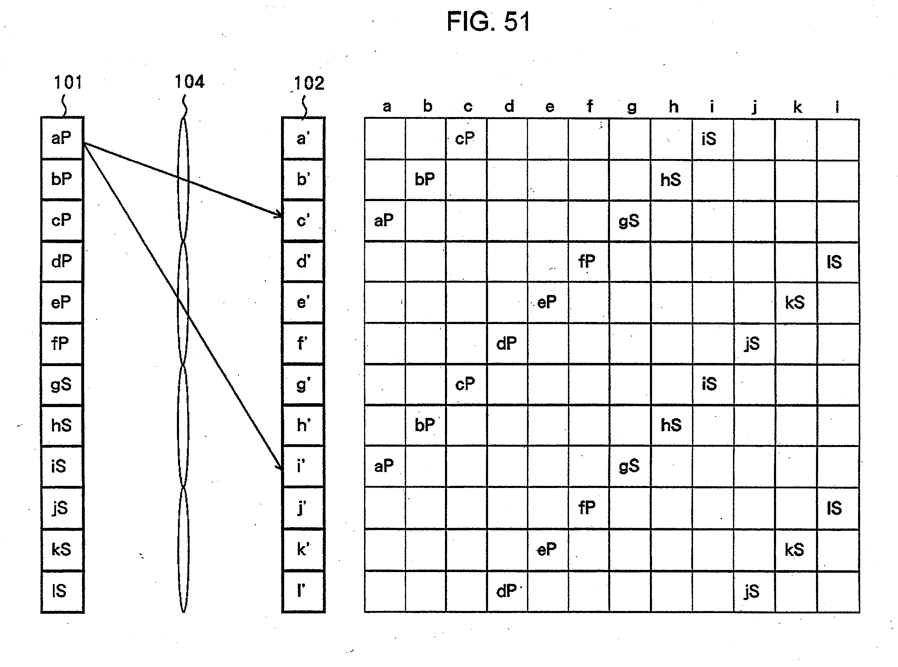

FIG. 51 shows a lateral view of the present embodiment and a table of the separation/projection pattern of the light from the display device 101 to the parallax barrier 102. In the present embodiment, the vertical repeating period of the vertical directionality control array 104 is three times the pixel height.

The light rays from the pixel lines a and g of the display device 101 are incident in superposition on the filter lines c' and i' of the parallax barrier 102. The light from the pixel line a is first polarization state light P, whereas the light from the pixel line g is second polarization state light S.

Similarly, the light rays from the pixel lines b and h are incident in superposition on the filter lines b' and h'. The light from the pixel line b is first polarization state light P, whereas the light from the pixel line h is second polarization state light S.

The light rays from the pixel lines c and i are incident in superposition on the filter lines a' and g'. The light from the pixel line c is first polarization state light P, whereas the light from the pixel line i is second polarization state light S.

The light rays from the pixel lines d and j are incident in superposition on the filter lines f' and 1'. The light from the pixel line d is first polarization state light P, whereas the light from the pixel line j is second polarization state light S.

The light rays from the pixel lines e and k are incident in superposition on the filter lines e' and k'. The light from the pixel line e is first polarization state light P, whereas the light from the pixel line k is second polarization state light S.

Moreover, the light rays from the pixel lines f and 1 are incident in superposition on the filter lines d' and j'. The light from the pixel line f is first polarization state light P, whereas the light from the pixel line 1 is second polarization state light S.

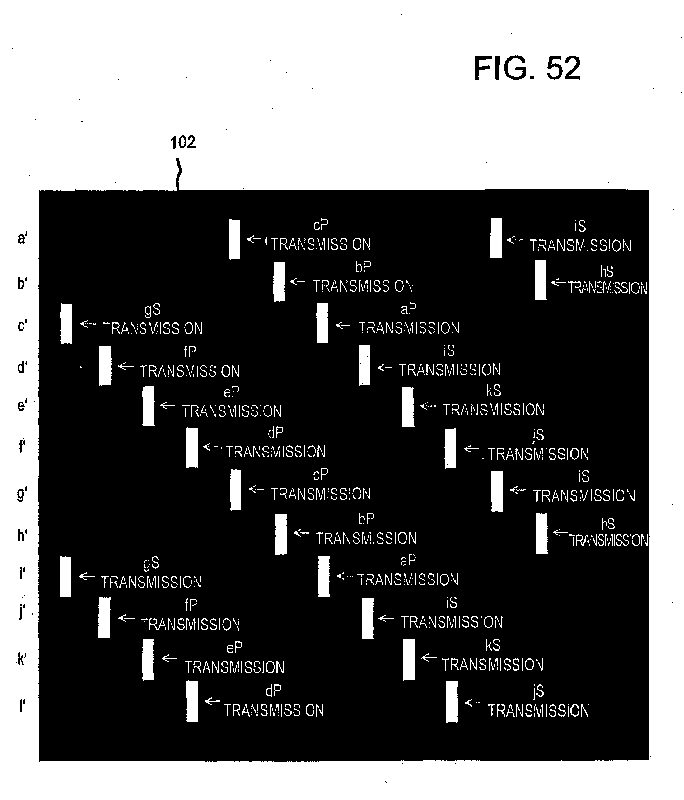

FIG. 52 is a front view showing the structure of the parallax barrier 102 of the present embodiment, corresponding to the pixel arrangement pattern in FIG. 50. At the filter lines a' and g', the P transmission filters arranged are used to transmit the light from the pixel line c, and the S transmission filters are used to transmit the light from the pixel line i.

At the filter lines b' and h', the P transmission filters arranged are used to transmit the light from the pixel line b, and the S transmission filters are used to transmit the light from the pixel line h.

At the filter lines c' and i', the P transmission filters arranged are used to transmit the light from the pixel line a, and the S transmission filters are used to transmit the light from the pixel line g.

At the filter lines d' and j', the P transmission filters arranged are used to transmit the light from the pixel line f, and the S transmission filters are used to transmit the light from the pixel line 1.

At the filter lines e' and k', the P transmission filters arranged are used to transmit the light from the pixel line e, and the S transmission filters are used to transmit the light from the pixel line k.

At the filter lines f' and 1', the P transmission filters arranged are used to transmit the light from the pixel line d, and the S transmission filters are used to transmit the light from the pixel line j.

Here, in the parallax barrier 102, P transmission filters and S transmission filters belonging to horizontal rows of transmission filters of different vertical positions and having different characteristics are arranged such that their positions do not overlap in the vertical direction (the horizontal positions are shifted against one another).

With the structure shown in FIGS. 50 to 52, as in the other embodiments, the horizontal components of the light from the pixels are guided correctly to the corresponding viewpoints.

What should be noted here is that the separation of the horizontal components of the light from the pixel lines is established independently for each and every one of the pixel lines.

That is to say, when the pixel arrangement pattern of FIG. 50 is combined with the arrangement pattern of the transmission filters of the parallax barrier in FIG. 52, then it becomes possible to direct the light rays from twelve different pixel lines independently to the desired direction in the horizontal direction.

Thus, using a vertical directionality control array having a vertical repeating period of three times the pixel height, it is possible to configure a stereoscopic image display apparatus using a pixel arrangement pattern configured by a matrix of 6×n pixels vertically and k pixels horizontally.

In general, the following should have become clear from these embodiments using a vertical directionality array having the above-noted two types of repeating periods in the vertical direction.

In Embodiments 1 to 3, when a parallax barrier is used that has selective transmissivity for light components with n states, then a stereoscopic image display apparatus can be configured using a pixel arrangement pattern constituted by a matrix of n pixels vertically and k pixels horizontally (where k is the number of viewpoints, and k = m × n (with k, m and n being natural numbers)), but in the present embodiment, by using a vertical directionality control array having a vertical repeating period which is p times the pixel height, it is possible to configure a stereoscopic image display apparatus using a pixel arrangement pattern made of a matrix of 2×p×n pixels vertically and k pixels horizontally.

*Embodiment 7*

In the foregoing Embodiments 5 and 6, a stereoscopic image display apparatus with a pixel arrangement pattern made of a matrix of 2×p×n pixels vertically and k pixels horizontally is configured using a vertical directionality control array having a vertical repeating period which is p times the pixel height. In the present embodiment, an example is shown in which the magnification β (the projection magnification of the vertical directionality control array in the vertical direction onto the parallax barrier with respect to the display device) during the separation and projection with the vertical directionality control array is set to a value larger than 1. It should be noted that in the present embodiment, as in Embodiment 2, an example of image separation using differences in the polarization state of the light is given, but the image separating method is not limited to this, and it is also possible to use a method of separating by color component (wavelength region) as in Embodiment 1.

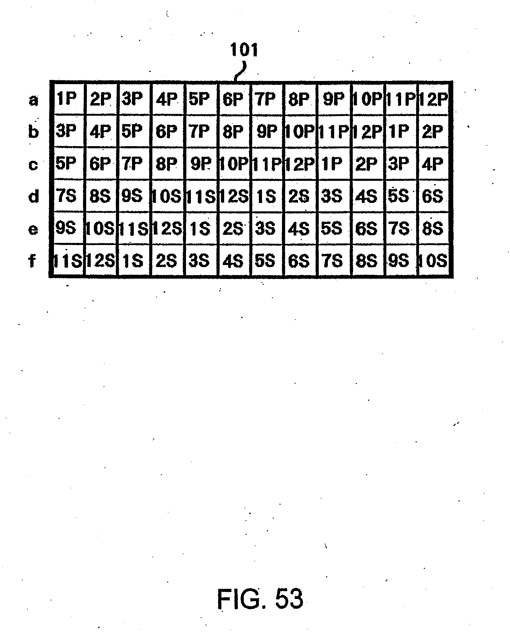

FIG. 53 is a front view showing an arrangement pattern of pixels on the display device 101. In the present embodiment, stereoscopic display with twelve viewpoints is performed, so that pieces of the parallax image information from 1 to 12 are arranged cyclically in the horizontal direction in each of the pixel lines, and the pixel arrangement pattern in the region enclosed by the bold frame in FIG. 53 is arranged repeatedly across the entire display device 1. In the present embodiment, the pixel arrangement pattern is made of a matrix of 6 pixels vertically and twelve pixels horizontally.

Moreover, in the present embodiment, three lines of pixels emitting the first polarization state light P and three lines of pixels emitting the second polarization state light S are arranged in repetition in the vertical direction.

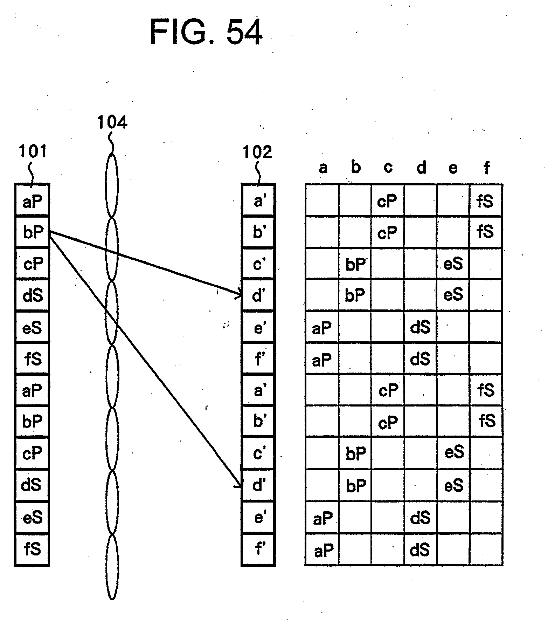

FIG. 54 shows a lateral view of the present embodiment and a table of the separation/projection pattern of the light from the display device 101 to the parallax barrier 102. In the present embodiment, the vertical repeating period of the vertical directionality control array 104 is twice the pixel height, and the projection magnification β in the vertical direction of the parallax barrier 102 from the display device 101 is 2 (> 1), so that the separation projection pattern is different from that in Embodiments 5 and 6.

The light rays from the pixel lines a and d of the display device 101 are incident in superposition on the filter lines e' and f' of the parallax barrier 102. The light from the pixel line a is first polarization state light P, whereas the light from the pixel line d is second polarization state light S.

The light rays from the pixel lines b and e are incident in superposition on the filter lines c' and d'. The light from the pixel line b is first polarization state light P, whereas the light from the pixel line e is second polarization state light S.

The light rays from the pixel lines c and f are incident in superposition on the filter lines a' and b'. The light from the pixel line c is first polarization state light P, whereas the light from the pixel line f is second polarization state light S.

What is characteristic for this embodiment is that the vertical height of the projected light on the parallax barrier 102 is twice the original pixel height.

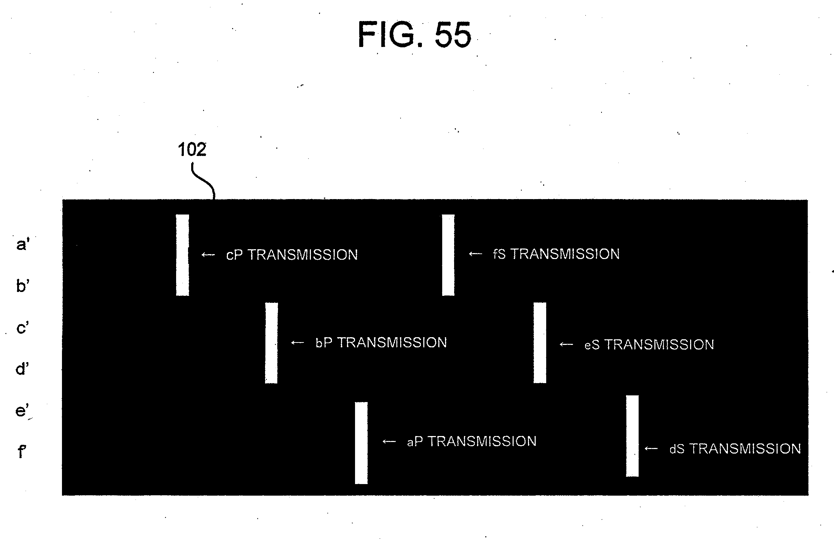

FIG. 55 is a front view showing the structure of the parallax barrier 102 of the present embodiment, corresponding to the pixel arrangement pattern in FIG. 53.

Spanning the filter lines a' and b', the P transmission filter is used to transmit the light from the pixel line c, and the S transmission filter is used to transmit the light from the pixel line f.

Spanning the filter lines c' and d', the P transmission filter is used to transmit the light from the pixel line b, and the S transmission filter is used to transmit the light from the pixel line e.

And spanning the filter lines e' and f', the P transmission filter is used to transmit the light from the pixel line a, and the S transmission filter is used to transmit the light from the pixel line b.

With the structure shown in FIGS. 53 to 55, as in the other embodiments, the horizontal components of the light from the pixels are guided correctly to the corresponding viewpoints.

What should be noted here is that the separation of the horizontal components of the light from the pixel lines is established independently for each and every one of the pixel lines. That is to say, when the pixel arrangement pattern of FIG. 53 is combined with the arrangement pattern of the transmission filters of the parallax barrier 102 in FIG. 55, then it becomes possible to direct the light from six different pixel lines independently to the desired direction in the horizontal direction.

Thus, using a vertical directionality control array 104 in which the magnification β during separation and projection of light is 2, it is possible to configure a stereoscopic image display apparatus similar to those of the other embodiments.

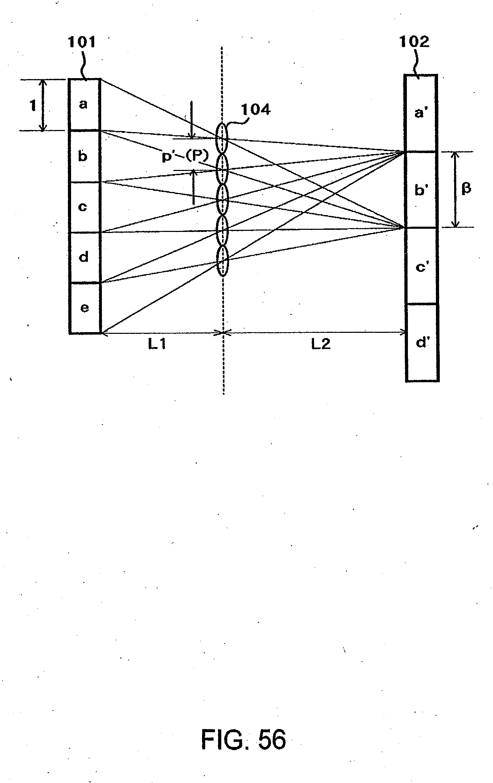

As can be seen from Embodiment 5 and this embodiment, there is some degree of freedom in the parameters of the separation and projection magnification β and the vertical repeating period p (= the multiple when taking the pixel height as 1) of the vertical directionality control array, and it is possible to set these parameters in combination during the design stage in accordance with the specifications required for the apparatus. An approach for setting the values of β and p is explained with reference to FIG. 56.

In order to attain an apparatus in accordance with the present embodiment, the images of the pixels must either overlap completely in the vertical direction or not overlap at all in the same direction on the parallax barrier 102, because if there is a partially overlapping region, then separation is difficult. Consequently, it is necessary that the geometrical relation shown in FIG. 56 is given.

FIG. 56 shows a state in which the vertical components of the light from all pixels overlap on the filter line b' on the parallax barrier 102. If this relation is established, then the same relation is also established for the other filter lines a', c', d' ... on the parallax barrier 102.

As for the parameters in FIG. 56, L1 is the distance from the display device 101 to the vertical directionality control array 104, L2 is the distance from the vertical directionality control array 104 to the parallax barrier 102, and p' is the vertical repeating period of the vertical directionality control array 104.

When the optical separation and projection magnification of the vertical directionality control array 104 is β, and the pixel height on the display device 101 is 1, then the vertical height of the image of the pixel projected onto the parallax barrier 102 becomes β.

In this case, the following geometric relations are given:

$$p' - L2/(L1 + L2)$$

$$\beta = L2/L1$$

and it follows that

$$p' = \beta/(\beta + 1)$$

In order to let the image of the pixels on the parallax barrier 102 overlap completely in the vertical direction or not overlap at all in the same direction, the vertical repeating period of the vertical directionality control array 104 must be p' or an integer multiple of p'. For this reason, the vertical repeating period p of the vertical directionality control array 104 should be:

$$p = p' \times q \text{ (where q is a natural number)}$$

If p' = β/(β + 1) is inserted into the foregoing equation, then:

$$p = \beta/(\beta + 1) \times q$$

When n' is the number of pixels in the vertical direction of the pixel arrangement matrix on the display device 101, then, using the number of light states n that can be selectively transmitted by the parallax barrier 102, the following relation is given:

n' = n×q (where q is a natural number that satisfies the equation q = (β + 1)/(β×p)

For example, using the method of separation by two polarization states, to configure an apparatus with β = 3, n' = 8, it follows from n = 2 that:

$$p = 3/4 \times q$$

$$n' = 2 \times q$$

and thus q = 2 and p = 8/3.

When β, p and n' are determined in this manner, the design freedom is extremely high.

The following table lists examples of combinations of these parameters for the case that n = 2.

Table 1

| β | q | p | n' |
|---|---|---|---|
| 1 | 1 | 1/2 | 2 |
| 1 | 2 | 1 | 4 |
| 1 | 3 | 3/2 | 6 |
| 1 | 4 | 2 | 8 |
| 1 | 5 | 5/2 | 10 |
| 1 | 6 | 3 | 12 |
| 1 | 7 | 7/2 | 14 |
| 1 | 8 | 4 | 16 |
| 2 | 1 | 2/3 | 2 |
| 2 | 2 | 4/3 | 4 |
| 2 | 3 | 2 | 6 |
| 2 | 4 | 8/3 | 8 |
| 2 | 5 | 10/3 | 10 |
| 2 | 6 | 4 | 12 |
| 2 | 7 | 14/3 | 14 |
| 2 | 8 | 16/3 | 16 |
| 3 | 1 | 3/4 | 2 |
| 3 | 2 | 3/2 | 4 |
| 3 | 3 | 9/4 | 6 |
| 3 | 4 | 3 | 8 |
| 3 | 5 | 15/4 | 10 |
| 3 | 6 | 9/2 | 12 |
| 3 | 7 | 21/4 | 14 |
| 3 | 8 | 6 | 16 |
| 4 | 1 | 4/5 | 2 |
| 4 | 2 | 8/5 | 4 |
| 4 | 3 | 12/5 | 6 |
| 4 | 4 | 16/5 | 8 |
| 4 | 5 | 4 | 10 |
| 4 | 6 | 24/5 | 12 |
| 4 | 7 | 28/5 | 14 |

EP 1 447 996 A2

Table 1   (continued)

| β | q | p | n' |
|---|---|---|---|
| 4 | 8 | 32/5 | 16 |

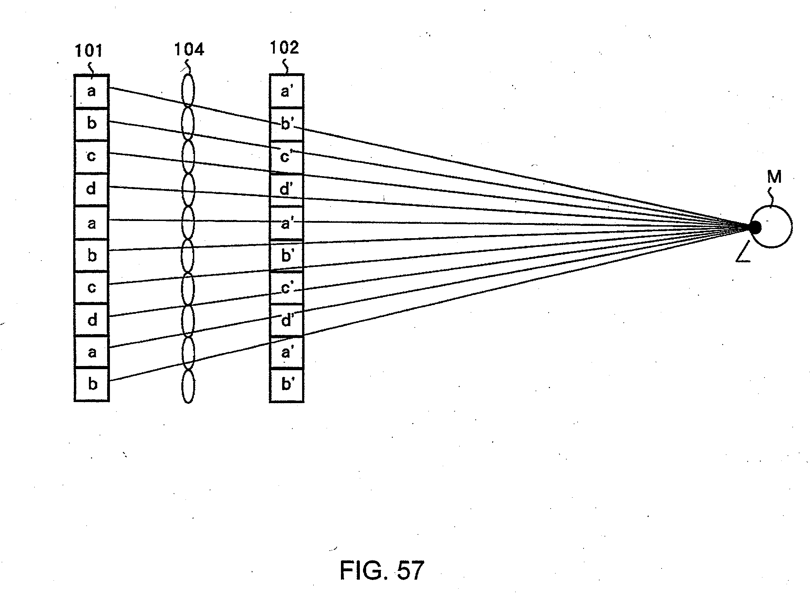

In the foregoing embodiments, the pixel lines on the display device and the filter lines on the parallax barrier have the same height. However, in the case of such a configuration, the filter lines on the parallax barrier 102 are not placed on straight lines connecting the eye of the viewer M and the pixel lines on the display device 101, as shown in FIG. 57, and it may not be possible to attain the desired performance.

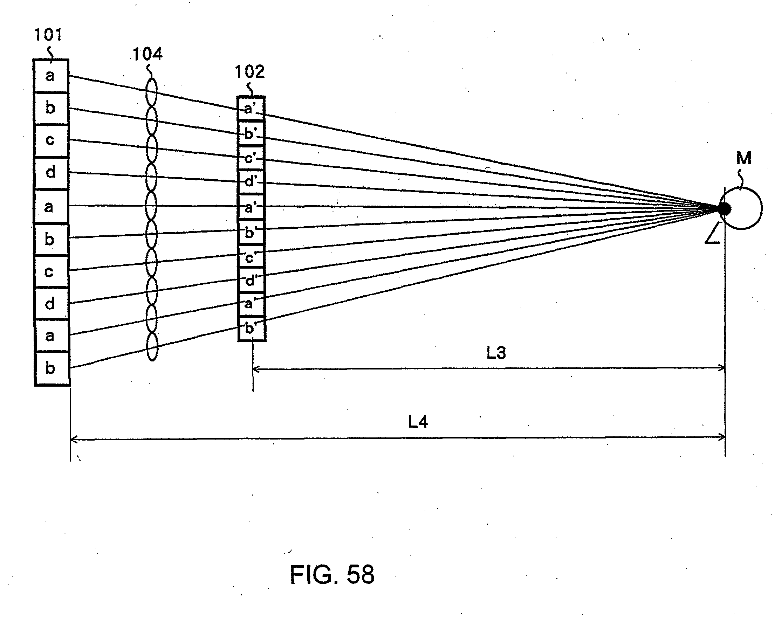

In order to address this problem, it is advantageous to reduce the height of the filter lines on the parallax barrier 102, and to design the apparatus such that the filter lines on the parallax barrier 102 are placed correctly on the straight line connecting the eye of the viewer M and the pixel lines on the display device 101, as shown in FIG. 58.

In this case, when $\alpha$ is the reduction ratio of the height of the filter lines on the parallax barrier 102, L3 is the distance from the parallax barrier 102 to the viewer M, and L4 is the distance from the display device 101 to the viewer M, then the following relation is given:

$$\alpha = L3/L4$$

In this case, it is preferable to use for the vertical repeating period p of the vertical directionality control array 104 a value β' obtained by multiplying the projection magnification $\beta$ with $\alpha$:

$$\beta' = \alpha\beta$$

so that replacing β with β' yields:

$p = \beta' / (\beta' + 1) \times q = \alpha\beta/ (\alpha\beta + 1) \times q$ (where q is a natural number)

With the foregoing embodiments as explained above, a multi-viewpoint stereoscopic image display apparatus is provided with which the discontinuities in the parallax images viewed from any viewing region can be alleviated, and which is capable of performing high-quality stereoscopic display.

While preferred embodiments have been described, it is to be understood that modification and variation of the present invention may be made without departing from scope of the following claims.

**Claims**

1.   A stereoscopic image display apparatus, **characterized by** comprising:

a display device displaying a plurality of parallax images by different pixels; and
an optical separating member in which a plurality of state-selective regions are lined up, which have properties of selectively transmitting light with different states, the optical separating member directing, of the light from the pixels, the light transmitted through the state-selective regions to a different viewing region for each parallax image.

2.   The stereoscopic image display apparatus according to claim 1, **characterized in that**
the plurality of state-selective regions in the optical separating member are lined up in a first direction, and the light transmitted through the state-selective regions is directed to different viewing regions in the first direction for each parallax image.

3.   The stereoscopic image display apparatus according to claim 2, **characterized in that**
a plurality of first direction rows of the state-selective regions are arranged in the optical separating member in a second direction perpendicular to the first direction; and
the stereoscopic image display apparatus further comprises an optical member projecting light from a first predetermined position in the display device, which is a position along the second direction, onto a second predetermined position in the state-selective regions, which is a position along the second direction.

23

4. The stereoscopic image display apparatus according to claim 3, **characterized in that**
   a projection magnification of the optical control member in the second direction onto the optical separating member with respect to the display device is larger than 1.

5. The stereoscopic image display apparatus according to claim 3 or 4, **characterized in that**
   the state-selective regions in the optical separating member are arranged such that positions of state-selective regions belonging to different rows of the first direction rows of the state-selective regions and having different properties do not overlap in the second direction.

6. The stereoscopic image display apparatus according to any one of claims 1 to 5, **characterized in that**
   the plurality of state-selective regions have properties of selectively transmitting light with different polarization states.

7. The stereoscopic image display apparatus according to any one of claims 1 to 5, **characterized in that**
   the plurality of state-selective regions have properties of selectively transmitting light with different wavelength regions.

8. The stereoscopic image display apparatus according to any one of claims 1 to 5, **characterized in that**
   the plurality of state-selective regions have properties of selectively transmitting light with different polarization states and different wavelength regions.

FIG. 1

| 1R | 2R | 3R | 4R | 5R | 6R | 7R | 8R | 9R |
|----|----|----|----|----|----|----|----|----|
| 7G | 8G | 9G | 1G | 2G | 3G | 4G | 5G | 6G |
| 4B | 5B | 6B | 7B | 8B | 9B | 1B | 2B | 3B |
| 1R | 2R | 3R | 4R | 5R | 6R | 7R | 8R | 9R |
| 7G | 8G | 9G | 1G | 2G | 3G | 4G | 5G | 6G |
| 4B | 5B | 6B | 7B | 8B | 9B | 1B | 2B | 3B |
| 1R | 2R | 3R | 4R | 5R | 6R | 7R | 8R | 9R |
| 7G | 8G | 9G | 1G | 2G | 3G | 4G | 5G | 6G |
| 4B | 5B | 6B | 7B | 8B | 9B | 1B | 2B | 3B |

FIG. 2

G TRANSMISSION FILTER

R TRANSMISSION FILTER          B TRANSMISSION FILTER

2

FIG. 3

R PIXEL GROUP →

| | | | 1R | 2R | 3R | 4R | 5R | 6R | 7R | 8R | 9R | | | |

~1

B TRANSMISSION FILTER        G TRANSMISSION FILTER

~2

R TRANSMISSION FILTER

FIG. 4

VIEWPOINT PLANE

9    8    7    6    5    4    3    2    1

G PIXEL GROUP→

| | | | | | | 1G | 2G | 3G | 4G | 5G | 6G | 7G | 8G | 9G |

R TRANSMISSION FILTER

B TRANSMISSION FILTER

G TRANSMISSION FILTER

FIG. 5

VIEWPOINT PLANE

9  8  7  6  5  4  3  2  1

FIG. 6

B PIXEL GROUP → | 1B | 2B | 3B | 4B | 5B | 6B | 7B | 8B | 9B | | | | | | | | ~1

B TRANSMISSION FILTER

G TRANSMISSION FILTER

~2

R TRANSMISSION FILTER

VIEWPOINT PLANE

9  8  7  6  5  4  3  2  1

EP 1 447 996 A2

FIG. 7

R PIXEL GROUP → 1R 2R 3R 4R 5R 6R 7R 8R 9R

G PIXEL GROUP → 1G 2G 3G 4G 5G 6G 7G 8G 9G

B PIXEL GROUP → 1B 2B 3B 4B 5B 6B 7B 8B 9B

B TRANSMISSION FILTER

G TRANSMISSION FILTER

R TRANSMISSION FILTER

VIEWPOINT PLANE

9 8 7 6 5 4 3 2 1

EP 1 447 996 A2

# FIG. 8

R PIXEL GROUP → 7R 8R 9R 1R 2R 3R 4R 5R 6R 7R 8R 9R 1R 2R 3R
G PIXEL GROUP → 4G 5G 6G 7G 8G 9G 1G 2G 3G 4G 5G 6G 7G 8G 9G
B PIXEL GROUP → 1B 2B 3B 4B 5B 6B 7B 8B 9B 1B 2B 3B 4B 5B 6B

$\triangle$B−R

$\triangle$G−B

$\triangle$R−G

Hd

L1

R TRANSMISSION FILTER

B TRANSMISSION FILTER

G TRANSMISSION FILTER

Hm(R−G)

Hm(B−R)

Hm(G−B)

L0

VIEWPOINT PLANE

9 8 7 6 5 4 3 2 1

He

EP 1 447 996 A2

# FIG. 9

R PIXEL GROUP ⟶ 1R 2R 3R 4R 5R 6R 7R 8R 9R 1R 2R 3R 4R 5R 6R 7R 8R 9R 1R 2R 3R 4R 5R 6R 7R 8R 9R
G PIXEL GROUP ⟶ 7G 8G 9G 1G 2G 3G 4G 5G 6G 7G 8G 9G 1G 2G 3G 4G 5G 6G 7G 8G 9G 1G 2G 3G 4G 5G 6G
B PIXEL GROUP ⟶ 4B 5B 6B 7B 8B 9B 1B 2B 3B 4B 5B 6B 7B 8B 9B 1B 2B 3B 4B 5B 6B 7B 8B 9B .1B 2B 3B

G   B   R   G   B   R   G   B   R   G   B

L1

L0

VIEWPOINT
PLANE

3   2   1   9   8   7   6   5   4   3   2   1   9   8   7

He

EP 1 447 996 A2

# FIG. 10

R PIXEL GROUP ⟶ 1R 2R 3R 4R 5R 6R 7R 8R 9R 1R 2R 3R 4R 5R 6R 7R 8R 9R 1R 2R 3R 4R 5R 6R 7R 8R 9R

G PIXEL GROUP ⟶ 8G 9G 1G 2G 3G 4G 5G 6G 7G 8G 9G 1G 2G 3G 4G 5G 6G 7G 8G 9G 1G 2G 3G 4G 5G 6G 7G

B PIXEL GROUP ⟶ 3B 4B 5B 6B 7B 8B 9B 1B 2B 3B 4B 5B 6B 7B 8B 9B 1B 2B 3B 4B 5B 6B 7B 8B 9B 1B 2B

G   B   R   G   B   R   G   B   R   G   B

L1

L0

VIEWPOINT PLANE

3   2   1   9   8   7   6   5   4   3   2   1   9   8   7

He

EP 1 447 996 A2

FIG. 11

FIG. 12

FIG. 13

FIG. 14

PRIOR ART

FIG. 15

# FIG. 16

# FIG. 17

| 3P | 4P | 5P | 6P | 7P | 8P | 1P | 2P |
|----|----|----|----|----|----|----|----|
| 7S | 8S | 1S | 2S | 3S | 4S | 5S | 6S |
| 3P | 4P | 5P | 6P | 7P | 8P | 1P | 2P |
| 7S | 8S | 1S | 2S | 3S | 4S | 5S | 6S |
| 3P | 4P | 5P | 6P | 7P | 8P | 1P | 2P |
| 7S | 8S | 1S | 2S | 3S | 4S | 5S | 6S |
| 3P | 4P | 5P | 6P | 7P | 8P | 1P | 2P |
| 7S | 8S | 1S | 2S | 3S | 4S | 5S | 6S |

101

P TRANSMISSION FILTER    S TRANSMISSION FILTER

102

FIG. 18

# FIG. 19

P PIXEL GROUP → | | 1P | 2P | 3P | 4P | 5P | 6P | 7P | 8P | 1P | 2P | 3P | 4P | | | | ~101

P TRANSMISSION FILTER

S TRANSMISSION FILTER

~102

VIEWPOINT PLANE

8  7  6  5  4  3  2  1

EP 1 447 996 A2

# FIG. 20

S PIXEL GROUP →

| | 5S | 6S | 7S | 8S | 1S | 2S | 3S | 4S | 5S | 6S | 7S | 8S | | | ~101 |

P TRANSMISSION FILTER

S TRANSMISSION FILTER

~102

VIEWPOINT PLANE

8  7  6  5  4  3  2  1

EP 1 447 996 A2

FIG. 21

S PIXEL GROUP → 5S 6S 7S 8S 1S 2S 3S 4S 5S 6S 7S 8S

P PIXEL GROUP → 1P 2P 3P 4P 5P 6P 7P 8P 1P 2P 3P 4P

~101

P TRANSMISSION FILTER        S TRANSMISSION FILTER

~102

VIEWPOINT PLANE

8    7    6    5    4    3    2    1

EP 1 447 996 A2

FIG. 22

S PIXEL GROUP → 5S 6S 7S 8S 1S 2S 3S 4S 5S 6S 7S 8S
P PIXEL GROUP → 1P 2P 3P 4P 5P 6P 7P 8P 1P 2P 3P 4P

Hd

101

ΔP-S

ΔS-P

L1

S TRANSMISSION FILTER

102

P TRANSMISSION FILTER

Hm(S-P)

Hm(P-S)

P TRANSMISSION FILTER

L0

VIEWPOINT PLANE

8 7 6 5 4 3 2 1

He

EP 1 447 996 A2

FIG. 23

S PIXEL GROUP →  5S 6S 7S 8S 1S 2S 3S 4S 5S 6S 7S 8S 1S 2S 3S 4S 5S 6S 7S 8S 1S 2S 3S 4S 5S

P PIXEL GROUP →  1P 2P 3P 4P 5P 6P 7P 8P 1P 2P 3P 4P 5P 6P 7P 8P 1P 2P 3P 4P 5P 6P 7P 8P 1P

L1

L0

P    S    P    S    P    S    P    S    P

VIEWPOINT PLANE ----

2   1   8   7   6   5   4   3   2   1   8   7

He

EP 1 447 996 A2

FIG. 24

S PIXEL GROUP → 6S 7S 8S 1S 2S 3S 4S 5S 6S 7S 8S 1S 2S 3S 4S 5S 6S 7S 8S 1S 2S 3S 4S 5S 6S

P PIXEL GROUP → 1P 2P 3P 4P 5P 6P 7P 8P 1P 2P 3P 4P 5P 6P 7P 8P 1P 2P 3P 4P 5P 6P 7P 8P 1P

VIEWPOINT PLANE

EP 1 447 996 A2

# FIG. 25

101a

| 3 | 4 | 5 | 6 | 7 | 8 | 1 | 2 |
|---|---|---|---|---|---|---|---|
| 7 | 8 | 1 | 2 | 3 | 4 | 5 | 6 |
| 3 | 4 | 5 | 6 | 7 | 8 | 1 | 2 |
| 7 | 8 | 1 | 2 | 3 | 4 | 5 | 6 |
| 3 | 4 | 5 | 6 | 7 | 8 | 1 | 2 |
| 7 | 8 | 1 | 2 | 3 | 4 | 5 | 6 |
| 3 | 4 | 5 | 6 | 7 | 8 | 1 | 2 |
| 7 | 8 | 1 | 2 | 3 | 4 | 5 | 6 |

101b

| P |
|---|
| S |
| P |
| S |
| P |
| S |
| P |
| S |
| P |

EP 1 447 996 A2

# FIG. 26

# FIG. 27

| (a) | 3P | 4P | 5P | 6P | 7P | 8P | 1P | 2P |
|---|---|---|---|---|---|---|---|---|
|  | 7S | 8S | 1S | 2S | 3S | 4S | 5S | 6S |

| (b) | 3P | 8S | 5P | 2S | 7P | 4S | 1P | 6S |
|---|---|---|---|---|---|---|---|---|
|  | 7S | 4P | 1S | 6P | 3S | 8P | 5S | 2P |

| (c) | 3P | 4P | 1S | 2S | 7P | 8P | 5S | 6S |
|---|---|---|---|---|---|---|---|---|
|  | 7S | 8S | 5P | 6P | 3S | 4S | 1P | 2P |

| (d) | 3P | 4P | 5P | 6P | 3S | 4S | 5S | 6S |
|---|---|---|---|---|---|---|---|---|
|  | 7S | 8S | 1S | 2S | 7P | 8P | 1P | 2P |

FIG.28

# FIG. 29

EP 1 447 996 A2

S PIXEL GROUP ⟶ 5S 6S 7S 8S 1S 2S 3S 4S 5S 6S 7S 8S 1S 2S 3S 4S 5S 6S 7S 8S 1S 2S 3S 4S 5S

P PIXEL GROUP ⟶ 1P 2P 3P 4P 5P 6P 7P 8P 1P 2P 3P 4P 5P 6P 7P 8P 1P 2P 3P 4P 5P 6P 7P 8P 1P

101

L1

103

102    P | S | P | S | P | S | P | S | P

L0

VIEWPOINT
PLANE

2  1  8  7  6  5  4  3  2  1  8  7

He

P TRANSMISSION FILTER

102

S TRANSMISSION FILTER

FIG. 30

FIG. 31

FIG. 32

FIG. 33

FIG. 34

## FIG. 35

EP 1 447 996 A2

# FIG. 36

101

| | | | | | | | | | |
|---|---|---|---|---|---|---|---|---|---|
| a | 1P | 2P | 3P | 4P | 5P | 6P | 7P | 8P | 1P | 2P |
| b | 3P | 4P | 5P | 6P | 7P | 8P | 1P | 2P | 3P | 4P |
| c | 5S | 6S | 7S | 8S | 1S | 2S | 3S | 4S | 5S | 6S |
| d | 7S | 8S | 1S | 2S | 3S | 4S | 5S | 6S | 7S | 8S |
| a | 1P | 2P | 3P | 4P | 5P | 6P | 7P | 8P | 1P | 2P |
| b | 3P | 4P | 5P | 6P | 7P | 8P | 1P | 2P | 3P | 4P |
| c | 5S | 6S | 7S | 8S | 1S | 2S | 3S | 4S | 5S | 6S |
| d | 7S | 8S | 1S | 2S | 3S | 4S | 5S | 6S | 7S | 8S |
| a | 1P | 2P | 3P | 4P | 5P | 6P | 7P | 8P | 1P | 2P |
| b | 3P | 4P | 5P | 6P | 7P | 8P | 1P | 2P | 3P | 4P |

FIG. 37

FIG. 38

EP 1 447 996 A2

FIG. 39

# FIG. 40

PIXEL LINE c ⟶

| | 5S | 6S | 7S | 8S | 1S | 2S | 3S | 4S | 5S | 6S | 7S | 8S | | | |

PIXEL LINE a ⟶

| | 1P | 2P | 3P | 4P | 5P | 6P | 7P | 8P | 1P | 2P | 3P | 4P | | | |

~101

~104

P TRANSMISSION FILTER    S TRANSMISSION FILTER

FILTER LINE a' OR c' ⟶     ~102

VIEWPOINT PLANE

8  7  6  5  4  3  2  1

EP 1 447 996 A2

FIG. 41

| | 1 | | | | | | | | | | | |
|---|---|---|---|---|---|---|---|---|---|---|---|---|
| a | 1R | 2R | 3R | 4R | 5R | 6R | 7R | 8R | 9R | 10R | 11R | 12R |
| b | 3R | 4R | 5R | 6R | 7R | 8R | 9R | 10R | 11R | 12R | 1R | 2R |
| c | 5G | 6G | 7G | 8G | 9G | 10G | 11G | 12G | 1G | 2G | 3G | 4G |
| d | 7G | 8G | 9G | 10G | 11G | 12G | 1G | 2G | 3G | 4G | 5G | 6G |
| e | 9B | 10B | 11B | 12B | 1B | 2B | 3B | 4B | 5B | 6B | 7B | 8B |
| f | 11B | 12B | 1B | 2B | 3B | 4B | 5B | 6B | 7B | 8B | 9B | 10B |
| a | 1R | 2R | 3R | 4R | 5R | 6R | 7R | 8R | 9R | 10R | 11R | 12R |
| b | 3R | 4R | 5R | 6R | 7R | 8R | 9R | 10R | 11R | 12R | 1R | 2R |
| c | 5G | 6G | 7G | 8G | 9G | 10G | 11G | 12G | 1G | 2G | 3G | 4G |
| d | 7G | 8G | 9G | 10G | 11G | 12G | 1G | 2G | 3G | 4G | 5G | 6G |

## FIG. 42

# FIG. 43

FIG. 44

2

a'  ← cG TRANSMISSION   ← aR TRANSMISSION   ← eB TRANSMISSION

b'  ← dG TRANSMISSION   ← bR TRANSMISSION   ← fB TRANSMISSION

c'  ← cG TRANSMISSION   ← aR TRANSMISSION   ← eB TRANSMISSION

d'  ← dG TRANSMISSION   ← bR TRANSMISSION   ← fB TRANSMISSION

e'  ← cG TRANSMISSION   ← aR TRANSMISSION   ← eB TRANSMISSION

f'  ← dG TRANSMISSION   ← bR TRANSMISSION   ← fB TRANSMISSION

EP 1 447 996 A2

FIG. 45

PIXEL LINE e →

| | 9B | 10B | 11B | 12B | 1B | 2B | 3B | 4B | 5B | 6B | 7B | 8B | |

PIXEL LINE c →

| | 5G | 6G | 7G | 8G | 9G | 10G | 11G | 12G | 1G | 2G | 3G | 4G | |

PIXEL LINE a →

| | 1R | 2R | 3R | 4R | 5R | 6R | 7R | 8R | 9R | 10R | 11R | 12R | |

R TRANSMISSION FILTER

G TRANSMISSION FILTER

B TRANSMISSION FILTER

FILTER LINE a' OR c' OR e' →

VIEWPOINT PLANE

12 11 10 9 8 7 6 5 4 3 2 1

EP 1 447 996 A2

FIG. 46

101

| | | | | | | | | | | |
|---|---|---|---|---|---|---|---|---|---|---|
| a | 1P | 2P | 3P | 4P | 5P | 6P | 7P | 8P | 1P | 2P |
| b | 2P | 3P | 4P | 5P | 6P | 7P | 8P | 1P | 2P | 3P |
| c | 3P | 4P | 5P | 6P | 7P | 8P | 1P | 2P | 3P | 4P |
| d | 4P | 5P | 6P | 7P | 8P | 1P | 2P | 3P | 4P | 5P |
| e | 5S | 6S | 7S | 8S | 1S | 2S | 3S | 4S | 5S | 6S |
| f | 6S | 7S | 8S | 1S | 2S | 3S | 4S | 5S | 6S | 7S |
| g | 7S | 8S | 1S | 2S | 3S | 4S | 5S | 6S | 7S | 8S |
| h | 8S | 1S | 2S | 3S | 4S | 5S | 6S | 7S | 8S | 1S |
| a | 1P | 2P | 3P | 4P | 5P | 6P | 7P | 8P | 1P | 2P |
| b | 2P | 3P | 4P | 5P | 6P | 7P | 8P | 1P | 2P | 3P |

FIG. 47

FIG. 48

101   104   102

| 101 |
|---|
| aP |
| bP |
| cP |
| dP |
| eS |
| fS |
| gS |
| hS |
| aP |
| bP |

| 102 |
|---|
| a' |
| b' |
| c' |
| d' |
| e' |
| f' |
| g' |
| h' |
| a' |
| b' |

| a | b | c | d | e | f | g | h | a | b |
|---|---|---|---|---|---|---|---|---|---|
|  | bP |  |  |  | fS |  |  |  | bP |
| aP |  |  |  | eS |  |  |  | aP |  |
|  |  |  | dP |  |  |  | hS |  |  |
|  |  | cP |  |  |  | gS |  |  |  |
|  | bP |  |  |  | fS |  |  |  | bP |
| aP |  |  |  | eS |  |  |  | aP |  |
|  |  |  | dP |  |  |  | hS |  |  |
|  |  | cP |  |  |  | gS |  |  |  |
|  | bP |  |  |  | fS |  |  |  | bP |
| aP |  |  |  | eS |  |  |  | aP |  |

EP 1 447 996 A2

# FIG. 49

101

| | | | | | | | | | | | |
|---|---|---|---|---|---|---|---|---|---|---|---|
| a | 1P | 2P | 3P | 4P | 5P | 6P | 7P | 8P | 9P | 10P | 11P | 12P |
| b | 2P | 3P | 4P | 5P | 6P | 7P | 8P | 9P | 10P | 11P | 12P | 1P |
| c | 3P | 4P | 5P | 6P | 7P | 8P | 9P | 10P | 11P | 12P | 1P | 2P |
| d | 4P | 5P | 6P | 7P | 8P | 9P | 10P | 11P | 12P | 1P | 2P | 3P |
| e | 5P | 6P | 7P | 8P | 9P | 10P | 11P | 12P | 1P | 2P | 3P | 4P |
| f | 6P | 7P | 8P | 9P | 10P | 11P | 12P | 1P | 2P | 3P | 4P | 5P |
| g | 7S | 8S | 9S | 10S | 11S | 12S | 1S | 2S | 3S | 4S | 5S | 6S |
| h | 8S | 9S | 10S | 11S | 12S | 1S | 2S | 3S | 4S | 5S | 6S | 7S |
| i | 9S | 10S | 11S | 12S | 1S | 2S | 3S | 4S | 5S | 6S | 7S | 8S |
| j | 10S | 11S | 12S | 1S | 2S | 3S | 4S | 5S | 6S | 7S | 8S | 9S |
| k | 11S | 12S | 1S | 2S | 3S | 4S | 5S | 6S | 7S | 8S | 9S | 10S |
| l | 12S | 1S | 2S | 3S | 4S | 5S | 6S | 7S | 8S | 9S | 10S | 11S |

# FIG. 50

FIG. 51

## FIG. 52

102

a'
cP
←( TRANSMISSION

iS
TRANSMISSION

b'
bP
← TRANSMISSION

hS
←TRANSMISSION

c'
gS
← TRANSMISSION

aP
← TRANSMISSION

d'
fP
← TRANSMISSION

iS
← TRANSMISSION

e'
eP
← TRANSMISSION

kS
← TRANSMISSION

f'
dP
←· TRANSMISSION

jS
←. TRANSMISSION

g'
cP
← TRANSMISSION

iS
TRANSMISSION

h'
bP
← TRANSMISSION

hS
←TRANSMISSION

i'
gS
← TRANSMISSION

aP
←TRANSMISSION

j'
fP
← TRANSMISSION

iS
← TRANSMISSION

k'
eP
← TRANSMISSION

kS
← TRANSMISSION

l'
dP
← TRANSMISSION

jS
←. TRANSMISSION

**101**

| | | | | | | | | | | | |
|---|---|---|---|---|---|---|---|---|---|---|---|
| a | 1P | 2P | 3P | 4P | 5P | 6P | 7P | 8P | 9P | 10P | 11P | 12P |
| b | 3P | 4P | 5P | 6P | 7P | 8P | 9P | 10P | 11P | 12P | 1P | 2P |
| c | 5P | 6P | 7P | 8P | 9P | 10P | 11P | 12P | 1P | 2P | 3P | 4P |
| d | 7S | 8S | 9S | 10S | 11S | 12S | 1S | 2S | 3S | 4S | 5S | 6S |
| e | 9S | 10S | 11S | 12S | 1S | 2S | 3S | 4S | 5S | 6S | 7S | 8S |
| f | 11S | 12S | 1S | 2S | 3S | 4S | 5S | 6S | 7S | 8S | 9S | 10S |

## FIG. 53

73 EP 1 447 996 A2

# FIG. 54

101

| aP |
| bP |
| cP |
| dS |
| eS |
| fS |
| aP |
| bP |
| cP |
| dS |
| eS |
| fS |

104

102

| a' |
| b' |
| c' |
| d' |
| e' |
| f' |
| a' |
| b' |
| c' |
| d' |
| e' |
| f' |

| a | b | c | d | e | f |
|---|---|---|---|---|---|
|  |  | cP |  |  | fS |
|  |  | cP |  |  | fS |
|  | bP |  |  | eS |  |
|  | bP |  |  | eS |  |
| aP |  |  | dS |  |  |
| aP |  |  | dS |  |  |
|  |  | cP |  |  | fS |
|  |  | cP |  |  | fS |
|  | bP |  |  | eS |  |
|  | bP |  |  | eS |  |
| aP |  |  | dS |  |  |
| aP |  |  | dS |  |  |

# FIG. 55

FIG. 56

FIG. 57

FIG. 58

## FIG. 59

Image4 Image3 Image2 Image1 Image4 Image3 Image2 Image1 Image4 Image3 Image2 Image1 Image4 Image3 Image2 Image1

PRIOR ART

FIG. 60

PRIOR ART

FIG. 61